# EUROPEAN PATENT SPECIFICATION

(11) **EP 1 667 419 B1**
(45) Date of publication and mention of the grant of the patent: **26.12.2012**
(21) Application number: 05256882.1
(22) Date of filing: 07.11.2005
(51) Int. Cl.: H04N 1/00

(54) **System, device and program for image processing**
System, Vorrichtung und Programm zur Bildbearbeitung
Système, appareil et logiciel de traitement d'images

(30) Priority: 05.11.2004 JP 2004322936
(43) Date of publication of application: 07.06.2006
(73) Proprietor: Brother Kogyo Kabushiki Kaisha, Nagoya-shi, Aichi-ken 467-8561 (JP)
(72) Inventor: Aoki, Kazuma c/o TP & IPD Brother Kogyo K.K., Nagoya-shi, Aichi-ken 467-8562 (JP); Yanagi, Satoru c/o TP & IPD Brother Kogyo K.K., Nagoya-shi, Aichi-ken 467-8562 (JP); Kokubo, Masatoshi c/o TP & IPD Brother Kogyo K.K., Nagoya-shi, Aichi-ken 467-8562 (JP); Miyazawa, Masafumi c/o TP & IPD Brother Kogyo K.K., Nagoya-shi, Aichi-ken 467-8562 (JP); Matsuda, Makoto c/o TP & IPD Brother Kogyo K.K., Nagoya-shi, Aichi-ken 467-8562 (JP); Ohara, Kiyotaka c/o TP & IPD Brother Kogyo K.K., Nagoya-shi, Aichi-ken 467-8562 (JP)
(74) Representative: Smith, Samuel Leonard

(56) References cited:
- EP-A- 0 782 326
- WO-A-2004/091188
- US-A1- 2003 011 633
- US-A1- 2004 160 630

## Description

### Cross Reference to Related Application

This application claims priority from Japanese Patent Application No. 2004-322936, filed on November 5, 2004.

### Field

Aspects of the present invention relate to an image processing system for performing an image-related process, an image processing device and a program for implementing the process.

### Background

Conventionally, there is known a system including terminal devices and a host computer that are interconnected through a network, and each terminal device is capable of using a function of the host computer through the network. An example of such a system is disclosed in Japanese Patent Provisional Publication No. H09-238215. In this system, bit data representing command codes for control and density of images is sent from the terminal device to the host computer, which analyzes the received command codes and performs image processing utilizing image editing functions specified for the image data and returns the processed data to the terminal device for printing.

Furthermore, in this system, if a new function is added to the host computer, the contents of the new function are sent from the host computer to the digital copier, which allows the user to select the new function to be registered to the digital copier. In other words, by registering the function the user wishes to use from the new functions to the digital copier, the registered function becomes usable.

US 2004/160630 discloses an image printing system, in which a PC server is connected through a network to a digital copying machine. The PC server includes parameter type files, in which the types of parameters necessary to execute the respective image processes are written. In particular, the PC server may control the operation unit of the digital copying machine.

US 2003/0011633 discloses a system for providing a user interface display on a multi functional peripheral device connected by a network to an external computer. The external computer is arranged to provide information data back to the multi functional peripheral device for changing the user interface display.

### Summary

According to aspects of the present invention, there is provided a terminal device capable of receiving services through a network even if the terminal device is not equipped with functions that correspond to the services.

According to a first aspect of the present invention there is provided an image processing system as set out in claim 1.

Thus, the system can accommodate an environment such as a typical server on the, internet, wherein the number of services fluctuates randomly everyday.

If, for example, information regarding new services are registered to the image processing device as in the conventional configuration, if the specifications of the parameters required for performing the service are later modified, new services cannot be received normally even if information regarding the new service is registered to the image processing device in an environment wherein services constantly created and deleted. Although, in order to resolve such issues, the image processing device should manage the parameter setting procedures accompanying modification of specifications, and the like, this is not preferable because the load placed upon the image processing device increases.

In the image processing system of the present invention, workload upon the image processing device can be reduced, even when the parameter specifications are modified, because the parameters necessary for performing service can be acquired as necessary from the image processing device.

The foregoing "service providing device" can be configured as a server on a network, in this case, with a single server or multiple servers. Out of the services provided by this service providing device, "service related to image data generated by a function provided to the image processing device" can be, for example, an image process represented by the image data (enlarge/reduce, black/white reversal, translation; and the like), a process for converting text included in an image represented by -image data, or a process for storing image data in a memory provided independently from the image processing device (for example, a server). "Service related to image data expressing image to be printed by a function provided to the image processing device" can be, for example, an image process represented by image data (enlarge/reduce, black/white reversal, translation, and the like), a process for converting voice into a text image, or a process for converting information from the internet, which is suitable for the specified condition to print an image.

The "image processing device" can be, for example, an image printing device (a printer device), an image reading device (a scanner device), a facsimile device, or an MFP (multiple function peripheral) having such functions.

With the above configuration, the image processing device acquires parameters by receiving a request from the acquisition requesting means, and based on the parameters acquired, the service from the service providing device can be received and image processing device functions related to the service can be implemented.

The "acquisition requesting means" in this configuration can be configured as a server on a network with a single server or multiple servers.

With the above configuration, the image processing device can receive the service from the service providing device when desired by the user.

With the above configuration, notification of the parameter acquired by the image processing device is passed to the service providing device, after which, the service providing device notifies the image processing device that the function should be implemented based on this parameter. Therefore, the image processing device merely implements the function based on the parameter for which notification was passed, and the image processing device does not have to manage the parameter.

In this configuration, the function implementation unit in the image processing device receives the service from the service provision executing unit provided to the service providing device and implements the function, subsequent to receiving notification from the implementation parameter notifying means provided in the service providing device.

The image processing device may be adapted to implement the function equipped in the image processing device when the function implementation unit is notified by the implementation parameter notifying means provided in the service providing device.

With the above configuration, the image processing device receives the service from the service providing device and implements the function when notification of the parameter is received.

The image processing device is provided with a parameter classifying means, which is adapted to classify the parameters obtained by the parameter specifying means into one of a first parameter group concerning functions that are equipped in the image processing device and a second parameter group concerning services provided by the service providing device. The acquired parameter notifying means is adapted to notify the service providing device of the parameters classified into the second parameter group. The service providing device is adapted to implement the service provided to the image processing device based on the parameters notified.

The image processing device may notify the service providing device of the parameter of the first group, related to the functions equipped in the image processing device.

In this configuration, the timing by which the parameter specifying means provided to the image processing device acquires parameters is not particularly limited. For example, a configuration can be considered, wherein the parameters are acquired when operations by the user are received.

With the above configuration, the image processing device can acquire the parameters when the request is received from the acquisition requesting means. At this time, parameters which include at least the parameters related to the functions can be acquired.

The image processing device may be provided with a parameter registering means, which may be adapted to register the parameters classified into the first parameter group by the parameter classifying unit. The function implementation means may be adapted to implement the function provided to the image processing device based on the parameters notified by the implementation parameter notifying means and the parameters registered by the parameter registering means.

With the above configuration, the image processing device can register the parameters classified into the first parameter group through the parameter registering unit, and the functions can be implemented by using relevant parameters from the registered parameters.

The parameter registering unit in this configuration, for example, registers parameters (or stores a data table composed of registered parameters) in a memory area reserved in the image processing device itself or another device, which is capable of communicating data with the image processing device.

Furthermore, in this configuration, the parameters classified into the first parameter group are registered in correspondence with functions to be implemented when the services to be provided by the service providing device are received. The function implementation unit specifies relevant parameters based on this correspondence.

The parameter specifying means may be adapted to obtain the parameters that correspond to a plurality of respective services. The service requesting means may be adapted to request the service that is specified by the user. The acquired parameter notifying means may be adapted to notify the service providing device of the parameters obtained from the parameter specifying means. The parameter registering means may be adapted to register the parameters classified into the first parameter group by the parameter classifying unit so that the registered parameters can specify the function to be implemented when the service requested by the service requesting means is provided.

With the above configuration, the image processing device, when receiving the service requested by the service request unit, can implement the functions based on the parameters corresponding to the function to be implemented when receiving the requested service from the parameters registered by the parameter registering means.

According to further aspects of the present invention there are also provided an imaging processing device, and computer program products as set out in claims 6 to 8 of the appended claims.

Each of the foregoing programs is composed of a row of sequentially-numbered orders suitable for computer process, and they are provided to each equipment (device and server) or user utilizing the equipment via recording media such as FD, CD-ROM, and memory card, or communication circuit networks such as the internet. These programs can also be provided to the user pre-installed on a hard disk, in memory, and the like for respective equipment.

### Brief Description of the Accompanying Drawings

Fig. 1 is a block diagram showing a configuration of the image processing system in accordance with aspects or the present invention.
Fig. 2 is a diagram of an operation panel in accordance with aspects of the present invention.
Fig. 3 is a diagram showing a data structure of the top service definition information in accordance with aspects of the present invention.
Fig. 4 is a diagram showing a data structure of the service definition information of the copy service in accordance with aspects of the present invention.
Figs. 5A, 5B and 5C are diagrams of the service selection screens in accordance with aspects of the present invention.
Fig. 6 is a diagram of a data structure of service I/F information corresponding to the translation copy service in accordance with aspects of the present invention.
Fig. 7 is a diagram of a data structure of service I/F information corresponding to the translation copy service in accordance with aspects of the present invention.
Figs. 8A, 8B, 8C, 8D and 8E are diagrams of the parameter input screens in accordance with aspects of the present invention.
Figs. 9A and 9B are diagrams illustrating resolutions, which can ordinarily be set in an MFP in accordance with aspects of the present invention.
Fig. 10 is a chart illustrating a flow of communication between the MFP and the function server in accordance with aspects of the present invention.
Fig. 11 is a flowchart illustrating a process for MFP in accordance with aspects of the present invention.
Fig. 12 is a diagram of a selection screen for prompting to select the service to be requested from the function server from a list in accordance with aspects of the present invention.
Fig. 13 is a flowchart illustrating a process for session process performed by the MFP in accordance with aspects of the present invention.
Fig. 14 is a flowchart illustrating the process for activation of the designated job performed by the MFP in accordance with aspects of the present invention.
Fig. 15 is a flowchart illustrating the process for UI job performed by the MFP in accordance with aspects of the present invention.
Fig. 16 is a flowchart illustrating the process for parameter setting performed by the MFP in accordance with aspects of the present invention.
Figs. 17A, 17B, 17C, 17D, and 17E are diagrams illustrating server parameters in accordance with aspects of the present invention.
Figs. 18A, 18B, 18C, 18D, 18E, and 18F are diagrams illustrating service parameter information and service parameters in accordance with aspects of the present invention.
Fig. 19 is a flowchart illustrating the process for the UI job 1 performed by the MFP in accordance with aspects of the present invention.
Fig. 20 is a flowchart illustrating a process for the UI job 2 performed by the MFP in accordance with aspects of the present invention.
Fig. 21 is a flowchart illustrating a process for the output job 1 performed by the MFP in accordance with aspects of the present invention.
Fig. 22 is a flowchart illustrating a process for the output job 2 performed y the MFP in accordance with aspects of the present invention.
Fig. 23 is a flowchart illustrating a process for the directory server process performed by the directory server in accordance with aspects of the present invention.
Fig. 24 is a flowchart illustrating a process for the function server process performed by the function server in accordance with aspects of the present invention.
Fig. 25 is a flowchart of a process for the service control information performed by the function server in accordance with aspects of the present invention.
Fig. 26 is a flowchart illustrating process for session performed by the function server in accordance with aspects of the present invention.
Fig. 27 is a flowchart illustrating process for session process performed by the function server (2/2);
Fig. 28 is a flowchart illustrating process for UI job performed by the function server in accordance with aspects of the present invention.
Fig. 29 is a flowchart illustrating a process for scan job 1 performed by the function server in accordance with aspects of the present invention.
Fig. 30 is a flowchart illustrating a process for scan job 2 performed by the function server in accordance with aspects of the present invention.
Fig. 31 is a flowchart illustrating a process for print job 1 performed by the function server in accordance with aspects of the present invention.
Fig. 32 is a flowchart illustrating a process for print job 2 performed by the function server in accordance with aspects of the present invention.
Fig. 33 is a flowchart illustrating a process for service addition performed by the function server in accordance with aspects of the present invention.
Fig. 34 is a flowchart illustrating a process for service modification performed by the function server in accordance with aspects of the present invention.
Fig. 35 is a flowchart illustrating a process for service deletion performed by the function server in accordance with aspects of the present invention.

### Detailed Description

Referring to the accompanying drawings, illustrative embodiments according to aspects of the present invention will be described.

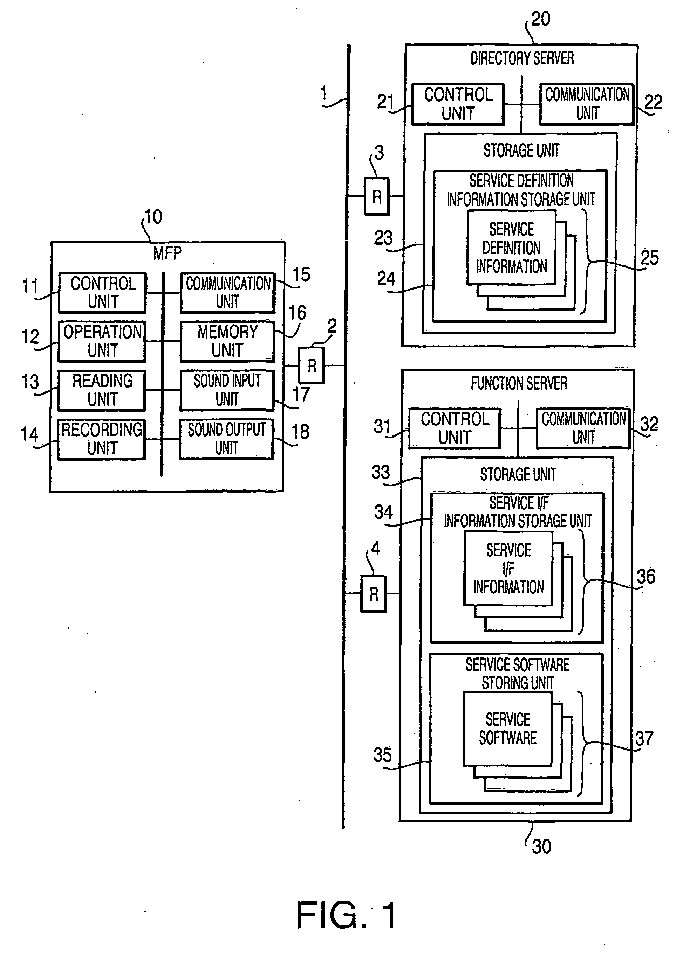

Fig. 1 is a block diagram showing a configuration of an image processing system in an illustrative embodiment.

As shown in Fig. 1, the image processing system is provided with an MFP (multiple function peripheral) 10, a directory server 20, and a function server 30, which are interconnected via a network 1 so as to perform data communication. According to the illustrative embodiments, the network 1 may be a Wide Area Network (WAN) such as the Internet. Specifically, the MFP 10, directory server 20 and function server 30 are connected to the network 1 via routers 2 to 4, respectively. (In Fig. 1, the routers 2-4 are represented by R, which may be known broadband routers). The router 2, which connects the MFP 10 and the network 1, is a known broadband router. Under the normal setting (default setting), all ports within this broadband router 2 are closed and, when a connection request is made from an internal source to an external destination (i.e., from the MFP 10 side to the network 1), only a packet that is compatible as a response to this request is allowed to pass. In other words, from the data transmitted from the external source to the internal destination under the normal setting, a response to the request from the internal source to the external destination is allowed to pass while all others are blocked. Through this, the broadband router 2 functions as a firewall that prevents unauthorized access to the MFP 10 from the network 1.

The MFP 10 has a telephone (voice communication) function, a scanner function, a printer function, a copy function, a facsimile function, and the like In the present image processing system, the MFP 10 can utilize numerous types of services related to the foregoing functions via the network 1. Specifically, the function server 30, provided to the network 1, is configured to enable the performance of numerous types of services related to the foregoing functions provided to the MFP 10. Furthermore, the directory server 20, also provided to the network 1, is configured to enable the provision of information regarding the services which can be utilized by the MFP 10 (services that can be performed by the function server 30), via the network, to the MFP 10.

The respective configurations of the MFP 10, the directory server 20, and the function server 30 are explained below.

### Configuration of MFP 10

The MFP 10 includes a control unit 11, an operation unit 12, a reading unit 13, a recording unit 14, a communication unit 15, a memory unit 16, a sound input unit 17, a sound output unit 18.

The control unit 11 includes CPU, ROM, RAM, and the like, and the CPU controls overall operation of the MFP 10 in accordance with programs stored in the ROM.

The operation unit 12 receives input operations by the MFP 10 from the user and displays information to the user. Specifically, the operation panel 12a includes a copy key 41, a scanner key 42, a FAX key 43, a service key 44, a setting key 45, up/down/right/left direction keys 46 through 49, an OK key 50 and a cancel key 51, as a group of keys for receiving input operations by the user. The operation panel 12a also includes a display 52 as a display unit for displaying information to the user.

The reading unit 13, which is an input device for implementing the scanner function, reads an image recorded (e.g., printed) on a sheet-type recording medium such as paper and generates image data representing the image. The recording unit 14, which is an output device for implementing the printer function, prints out the image represented by the image data on a sheet-type recording medium such as paper.

The communication unit 15 is configured to connect the MFP 10 to the network 1 and also performs process necessary for enabling data transmission via the network 1. The memory unit 16 includes a nonvolatile RAM (not shown) in which data can be stored.

The sound input unit 17 receives a sound signal from a microphone provided to a handset (not shown) provided to the MFP 10, and generates sound data (PCM data) representing the received sound signal. The sound output unit 18 outputs sound in accordance with the sound data (PCM data) through a speaker provided to the handset (not shown) or a speaker (not shown) provided on a main body of the MFP 10.

### Configuration of Directory Server 20

The directory server 20 includes a control unit 21, a communication unit 22 and a memory unit 23. The control unit 21 is provided with CPU, ROM, RAM, and the like, and the CPU controls the entire operation of the directory server 20 in accordance with programs stored in the ROM.

The communication unit 22 is connected to the directory server 20 in the network 1 and performs a process to transmit/receive data via this network. Memory unit 23 includes a hard disk (not shown) wherein data is stored. The memory unit 23 is equipped with a service definition information memory unit 24 for recording service definition information 25.

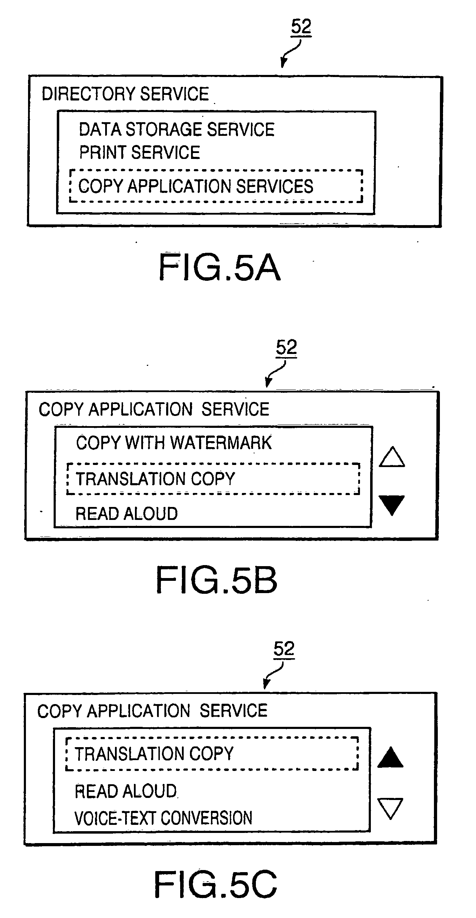

The service definition information 25 provides information (service types and request destinations) regarding services that can be implemented by the function server 30. Specifically, when received by the MFP 10, the service definition information 25 allows the display 52 provided in the MFP 10 to display a service selection screen (see Fig. 5) showing service types and prompts the MFP 10 user to select a service. The directory server 20 classifies and manages the services that can be performed by the function server 30 into three categories, i.e., "data storage service", "printing service", and "copy service".

First, the service selection screen shows the foregoing three categories and prompts the user to select one category. Next, the service selection screen shows the services included in the selected category and prompts the user to select one service. The service definition information 25 corresponding to the service selection screen that prompts for the selection of a category (hereinafter referred to as the "top service definition information 25") and service definition information 25 corresponding to the service selection screen that prompts for selection of service provided in each category are stored to the service definition information memory unit 24.

Here, a detailed example of service definition information 25 is explained below.

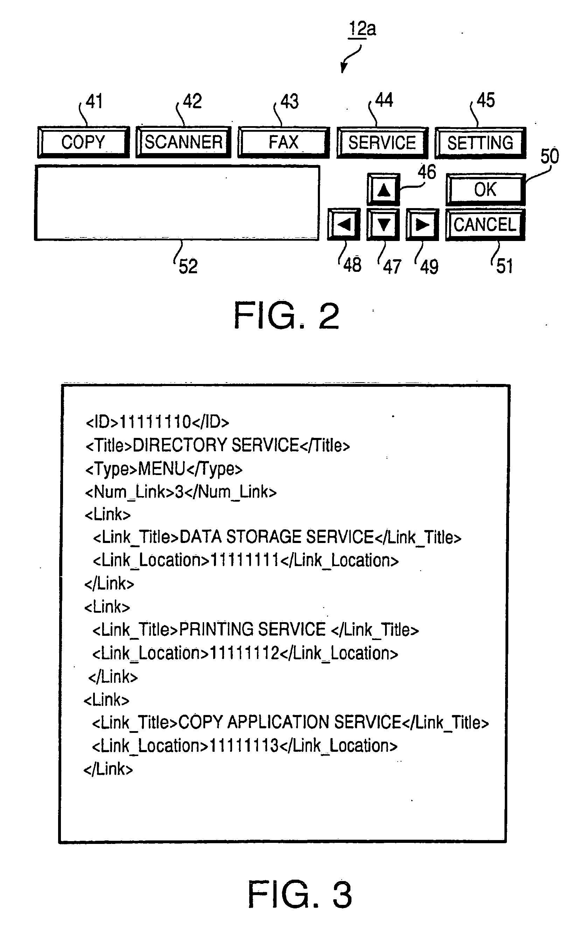

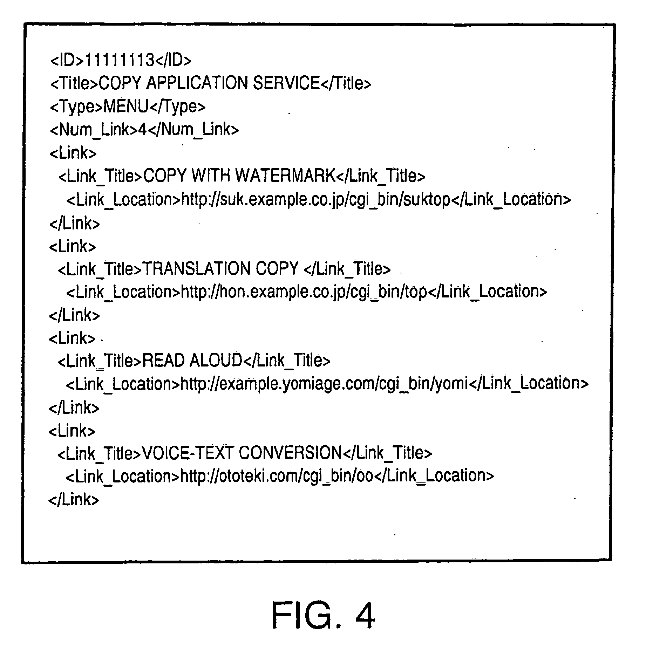

Fig. 3 and Fig. 4 are illustrating diagrams showing an example of a data structure of the service definition information 25. Specifically, Fig. 3 shows a data structure of the top service definition information 25, and Fig. 4 shows the data structure of service definition information 25 regarding "copy service" that is one of the foregoing three categories. As shown in the drawings, the service definition information 25 is described in XML (extensible Markup Language), and the definitions of each tag used in Fig. 3 and Fig. 4 are as shown in Table 1.

**Table 1**

| | Data Name | Data Type | Description |
|---|---|---|---|
| Basic Data | ID | Integer | Identification information of service definition information |
| | Title | Character string | Displayed title |
| | Type | 'MENU' or 'Form' | Indicates Body data type. If it is Menu, a list of links to other information is defined; if it is Form, a data entry form is defined. The Type is 'MENU' if information is service definition information. |
| Body data (When Type is "MENU") | Num_Link | Integer | Number of Link data |
| | Link[] | - | Actual Link data |
| Link data | Link_Title | Character string | Displayed character string for explaining service of or information on the link destination |
| | Link_Location | Character string | URL for calling forth service or ID for other service definition information |

When the top service definition information 25 (see Fig. 3) is received by the MFP 10, the service selection screen shown in Fig. 5A is displayed in the display 52 in the operation panel 12a provided to the MFP 10. Specifically, the characters, "Directory Service", are shown in the upper part of the display 52 as the display title (Title) and characters, "data storage service", "printing service" and "copy services", which are the selectable categories (Link_Title), are shown therebelow. If the user operates the up/down direction keys 46 and 47 on the operation panel 12a, the cursor for selecting the item (the broken-line rectangle in Fig. 5) moves vertically, and the selection of the item designated by the cursor is established when the user presses the OK key 50 on the operation panel 12a. IDs for the service definition information 25, which correspond to the respective categories, correspond to respective items (Link_Location), and when the item is selected, the ID of the service definition information 25 corresponding to the respective item is received by the MFP 10.

For example, when "copy service" is selected from the service selection screen shown in Fig. 5A, the service definition information 25 in Fig. 4 is received by the MFP 10, and the service selection screen shown in Fig. 5B is displayed on the display 52. Specifically, the characters, "copy service", are shown in the upper part of the display 52 as the display title (Title) and characters, "copy with watermark", "translation copy", "manuscript read out", and "voice-text conversion", which are the selectable services (Link_Title), are shown therebelow.

However, as all of the items cannot be displayed at once due to the size limitation of the display 52, if there are items that are not shown on the display 52, the MFP 10 shows up and down arrows (i.e., triangles) on the right side of the item display position in the display 52. If there are items in the direction indicated by the arrow, the arrow is black, and if there are no items, the arrow is white. Thus, the user is allowed to determine if there are still items that are to be shown. For example, the down arrow is black in Fig. 5B, indicating that there are other items below "manuscript read out". Therefore, if the cursor is moved down by the down direction key 47 on the operation panel 12a, in the state in Fig. 5B, the entire list of items are scrolled and, as shown in Fig. 5C, the characters, "voice-text conversion" appears below "manuscript read out".

The items are also selected by the foregoing operations in the service selection screens shown in Fig. 5B and Fig. 5C. Here, URLs for calling forth respective services correspond to the respective items (Link_Location), and when the items are selected, the service of the URL corresponding to the respective item is called forth.

### Configuration of Function Server 30

The function server 30 includes a control unit 31, a communication unit 32, and a memory unit 33.

The control unit 31 includes known CPU, ROM, RAM, and the like (not shown), and the CPU controls overall operation of the function server 30 in accordance with programs stored in the ROM. The control unit 31 is configured to be sufficiently high-performing compared to the control unit 11 of the MFP 10, and is capable of performing processes, which may result in an overload condition if performed by the control unit 11.

The communication unit 32 is connected to the function server 30 through the network 1, and performs processes for transmitting and receiving data through the network 1 The memory unit 33 is provided with a hard disk (not shown) wherein data is stored. The memory unit 33 includes a service I/F information memory unit 34 for storing service I/F information 36, and a service software memory unit 25 for storing service software 37, which performs processes for providing various services.

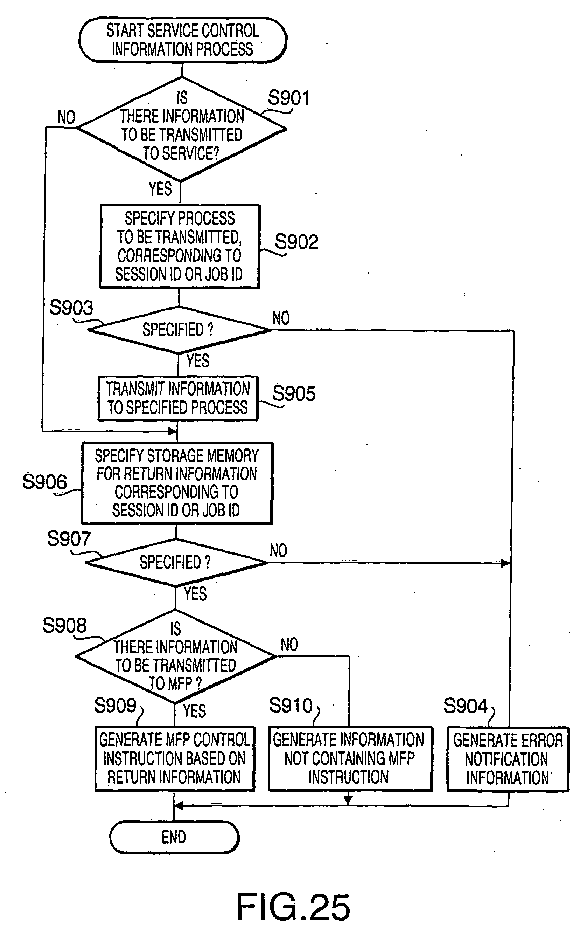

The service software 37 allows the performance of numerous types of services. Specifically, numerous types of service software 37 are stored in the service software memory unit 35, and a different service is performed for each type of service software 37. These services can be, for example, a service related to image data generated by the reading unit 13 in the MFP 10, a service related to sound data generated by the sound input unit 17 in the MFP 10, a service related to image data representing an image to be printed by the recording unit 14 in the MFP 10, and a service related to sound data representing sound output by the sound output unit 18 in MFP 10. The process (Fig. 25 to Fig. 32), described hereafter, are performed based on the service software 37.

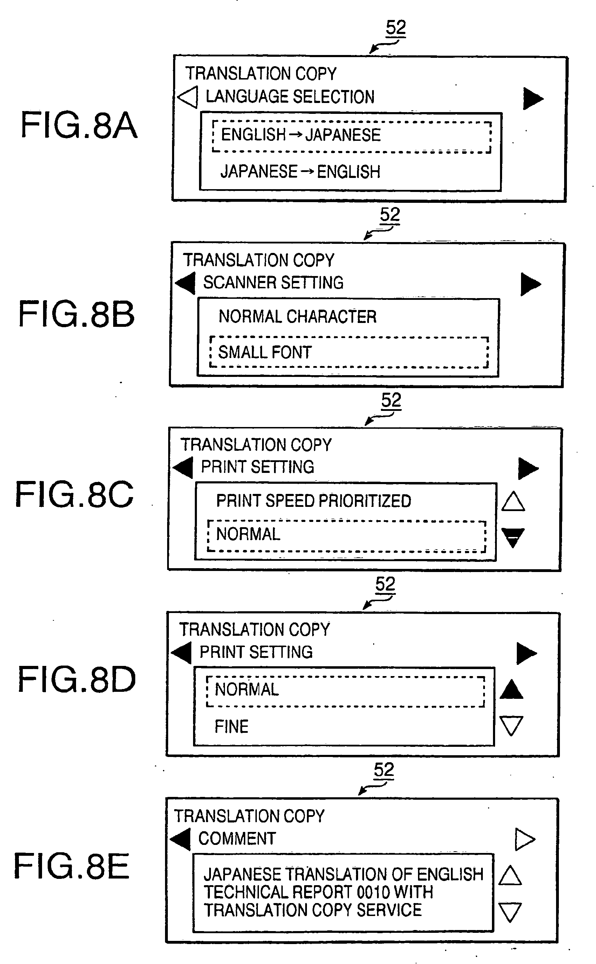

The service I/F information 36 requests the MFP 10 for parameters, which are required to be set in order to perform the service. Specifically, when received by the MFP 10, the service I/F information 36 displays a parameter input screen (see Fig. 8) showing the parameters to be set in the display 52 on the operation panel 12a provided to the MFP 10, and prompts the user to set the parameters. Numerous types of service I/F information 36, corresponding respectively to numerous types of services that can be performed by the function server 30, are stored in the service I/F information memory unit 34.

A detailed example of the service I/F information 36 is explained below.

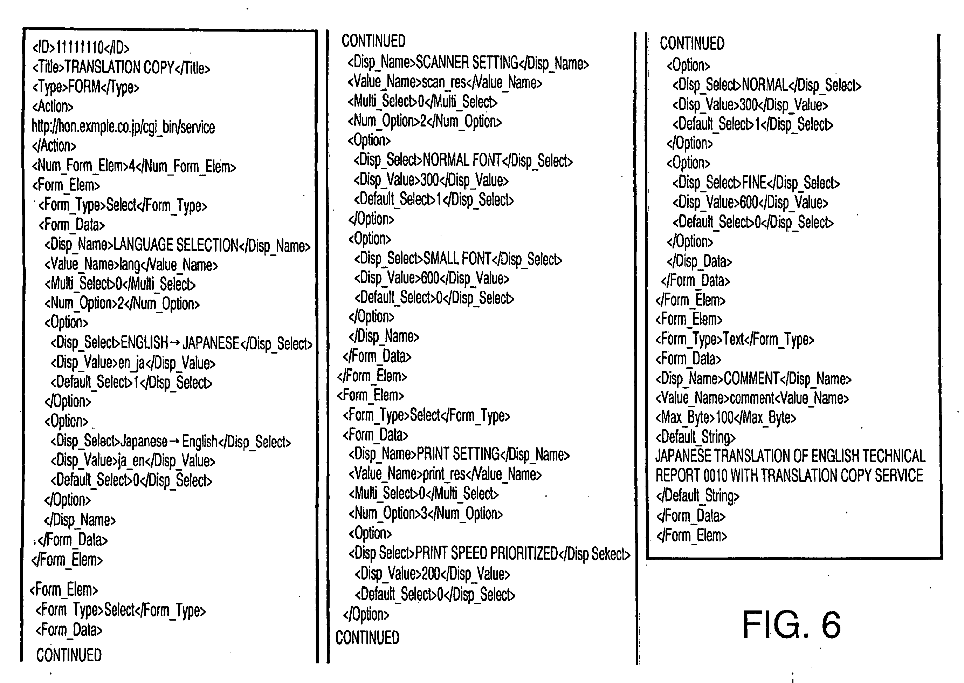

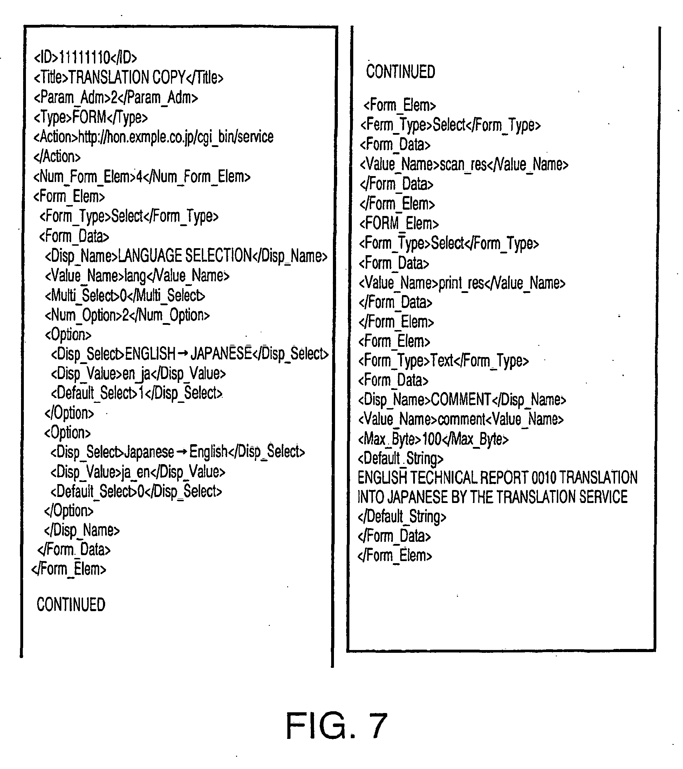

Fig. 6 and Fig. 7 are illustrating diagrams showing an example of the data structure of service I/F information 36. Specifically, the data structure of the service I/F information 36 corresponding to a service (i.e., a translation copy service) for performing an OCR process on an image read by the reading unit 13 in the MFP 10, acknowledging the text content of this image, generating image data representing the translated content of this text, and enabling the recording unit 14 in the MFP 10 to print this image, is shown. As shown in the drawings, the service I/F information 36 is also described in XML similarly to the foregoing service definition information 25, and the definitions of each tag used in Fig. 6 and Fig. 7 are shown in Table 2 below. The basic data in Table 2 is the same as the basic data for the foregoing service definition information 25 (Table 1).

**Table 2**

| | Data Name | Data Type | Description |
|---|---|---|---|
| Basic Data | ID | Integer | Identification information of service I/F information |
| | Title | Character string | Displayed title |
| | Type | 'MENU' or 'Form' | Indicates Body data type. If it is Menu, a list of links to other information is defined; if it is Form, a data entry form is defined. The Type is 'FORM' if information is service I/F information. |
| | Param_Adm | Integer | Input/output device parameter management type |
| | | | 1: transmit to server |
| | | | 2: manage by MFP |
| Body data (When Type is "FORM") | Action | URL Character string | URL of program for receiving and process input data |
| | Num_Form_Elem | Integer | Number of Form_Elem |
| | Form_Elem[] | - | Type-dependent Form element data |
| Form_Elem data (Form element data) | Form_Type | 'Text' or 'Password' or 'Select' | Type of Form element |
| | Form Data | - | Type-dependent data |
| Form_Data data ('Text' or 'Password') | Disp_Name | Character string | Character string explaining input items |
| | Value_Name | Character string | Variable name when transmitting as data |
| | Max_Byte | Integer | Maximum number of bytes of character string which can be input |
| | Default_String | Character string | Character string initially shown in the entry area |
| Form_Data data (Select) | Disp_Name | Character string | Character string explaining input items |
| | Value_Name | Character string | Variable name when transmitting as data |
| | Multi_Select | 0 or 1 | 0: Multiple selections prohibited |
| | | | 1: Multiple selections allowed |
| | Num_Option | Integer | Number of selection items |
| | Option[] | - | Information related to selection items (explained hereafter) |
| Option data | Disp_Select | Character string | Displayed character string showing choices |
| | Disp_Value | Character string | Value when transmitting as data when selected |
| | Default_Select | 0 or 1 | 0: Not selected in initial state |
| | | | 1: Selected in initial state |

In the present illustrative embodiment, information wherein the "Param_Adm" in the basic data is "1" (see Fig. 6) and information wherein it is "2" (Fig. 7) are stored in the service I/F information memory unit 34 as service I/F information of the same content, and which information to transmit is set by an operation in an operation unit (not shown).

When the service I/F information 36 shown in Fig. 6 and Fig. 7 is received by the MFP 10, the parameter input screen shown in Fig. 8A is displayed on the display 52 of the operation panel 12a provided to the MFP 10. Specifically, the characters, "translation copy", are shown in the upper part of the display 52 as the display title (Title), characters, "language selection" are shown therebelow, and the characters, "English -> Japanese" and "Japanese -> English", which are the selectable parameters (Link_Title), are shown further below. If the user operates the up/down direction keys 46 and 47 on the operation panel 12a in this state, the cursor for selecting the item moves vertically, as in the foregoing service selection screen.

Although, to the displayed "language selection", the input items (Disp_Name) related to "translation copy" includes "scanner setting", "print setting", and "comments" (refer to Fig. 6 and Fig. 7), all of the input items cannot be shown at once due to the size limitation of the display 52. If there are input items that are not shown on the display 52, the MFP 10 shows left and right arrows (i.e., triangles) in both left and right sides of the item display position in the display 52. If there are items in the direction indicated by the arrow, the arrow is black, and if there are no items, the arrow is white. Thus, the use is allowed to determine if there are still items to be shown. For example, the right arrow is black in Fig. 8A, indicating that there are other items to the right of "language selection". Therefore, if the right direction key 49 on the operation panel 12a is pressed in the state in Fig. 8A, the screen switches to a parameter input screen of which the input item is "scanner setting".

In the parameter input screen shown in Fig. 8B, the characters, "scanner setting", are displayed as the input item (Disp_Name) below the characters, "translation copy", which are displayed as the display title (Title). Further below, the characters, "normal font" and "small font", are displayed as items showing the selectable parameters (Disp_Select) in the input item "scanner setting".

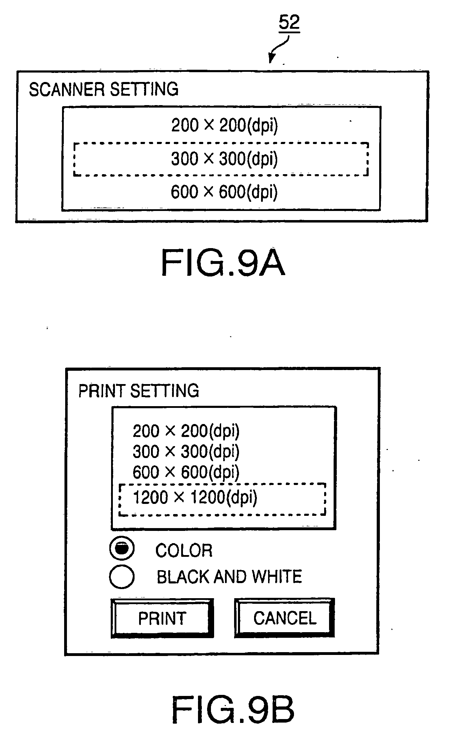

"Normal font" refers to the resolution (read resolution), which is a parameter of a read unit 13 being set to 300 x 300 dpi, and "small font" refers to the resolution, which is set to 600 x 600 dpi. In this example, the resolution that can be set in the "scanner setting" is limited to a part of the resolution generally set in the MFP 10. In other words, generally, when an operation for reading an image printed on a sheet of paper is performed in the MFP 10, the resolution of the scanner 13 can be selected from 200 x 200 dpi, 300 x 300 dpi, and 600 x 600 dpi, in the setting screen shown in the display 52 of the operation panel 12, as shown in Fig. 9A. The low resolution, 200 x 200dpi, is not to be set in the translation copy service, as in the OCR process, precision will drop if the image resolution is low. In order to improve the OCR process precision, reading is limited to black and white in this example.

If the right direction key 49 on the operation panel 12a is pressed in the state shown in Fig. 8B, the screen changes to a parameter input screen ,of which the input item is "print setting", as shown in Fig. 8C.

In the parameter input screen shown in Fig. 8C, the characters, "print setting" are displayed as the input item (Disp_Name) below the characters, "translation copy", displayed as the display title (Title). Further below, the characters, "printing speed prioritized", "normal", and "high-definition", are displayed as items showing the selectable parameters (Disp_Select) in the input item "print setting".

However, all of the items cannot be shown at once due to the size limitation of the display 52. Similarly to the service selection screen (Fig. 5B and Fig. 5C) described above, a left and a right arrows (triangles) are displayed in both left and right sides of the item display position in the display 52. If items exist in the direction indicated by the arrow, the arrow is black, and if there is no item, the arrow is white. Thus, the user is allowed to determine if there are still items to be shown. For example, if the cursor is moved down by the down direction key 47 on the operation panel 12a, in the state in Fig. 8C, the entire list of items is scrolled and, as shown in Fig. 8D, the characters, "high-definition" appears below "normal".

"Printing speed prioritized" refers to the resolution (print resolution), which is a parameter of the record unit 14 being set to 200 x 200 dpi, "normal" refers to the resolution, which is set to 300 x 300 dpi, and "high-definition" refers to a resolution set to 600 x 600 dpi. In this example, the resolution that can be set in the "print setting" is limited to a part of the resolution, which can be generally set in the MFP 10. In other words, generally, when an operation for instructing the MFP 10 to print out an image is performed by a personal computer (not shown), the resolution of the scanner 13 can be selected from 200 x 200 dpi, 300 x 300 dpi, 600 x 600 dpi, and 1200 x 1200 dpi in the setting screen shown in the display of the personal computer, as shown in Fig. 9B. The highest resolution, 1200 x 1200 dpi, is not to be set in the translation copy service, as it is not necessary to set the printing resolution to a value higher than can be set as the reading resolution of the scanner 13. The printing resolution is allowed to be set to low resolution out of necessity to print quickly, even if the resolution is lowered. As the scanned image is limited to black and white, printing is also limited to black and white in this example.

If the right direction key 49 on the operation panel 12a is pressed in the state shown in Fig. 8D, the screen changes to a parameter input screen, of which the input item is "comments", as shown in Fig. 8E.

In the parameter input screen shown in Fig. 8E, the characters, "comments" are displayed as the input item (Disp_Name) below the characters, "translation copy", displayed as the display title (Title). Further below, an entry field for comment is displayed. Contents entered as comments are used in, for example, the header and footer of the print image.

Thus, the parameters regarding each input item in "language selection", "scanner setting", and "print setting" are selected and comments are entered in the parameter input screen (Fig. 8A to Fig. 8E) of the translation copy service. The item is selected by being designated with the cursor (the item designated last if the input item is not shown in the display 52), and the entry of the comment is completed, when the user presses the OK key 50 on the operation panel 12a. These parameters are transmitted to the URL (Action) of the program that receives and processes the input data.

The selectable parameters of an input item may be changed based on the selected parameters of another input item. For example, if "normal font" is selected as the parameter in the scanner setting, the setting of printing resolution to 600 x 600 dpi is prevented from being selected regardless of the reading resolution being set to 300 x 300 dpi, if "high-definition" is set to be unselectable as a parameter in the print setting.

### Communication in the Image Processing System

In the image processing system, HTTP (HyperText Transfer Protocol) 1.1 is used as the communication protocol for transmitting data among the MFP 10, the directory server 20, and the function server 30. Instructions and responses to the instructions are mutually transmitted in messages accompanied by an HTTP request and a response.

Instructions that are mutually communicated include instructions from the MFP 10 to the respective servers 20 and 30 (i.e., server control instructions) and instructions from the respective servers 20 and 30 to the MFP 10 (i.e., MFP control instructions), and both communications are always made with the MFP 10 as the HTTP communication client (the one transmitting the HTTP request). Therefore, the instructions from the respective servers 20 and 30 to the MFP 10 can be prevented from being blocked, even if the broadband router 2 is used with the normal setting.

Specifically, the MFP 10 transmits an instruction to the directory server 20 or the function server 30 through a message accompanied by the POST command of the HTTP request. The servers 20 and 30 respectively transmit an MFP control instruction accompanied by the HTTP response message for the forgoing inquiry, if there is an MFP control instruction, with regards to the MFP control instruction inquiry by the message accompanied by the POST command of the HTTP request from the MFP 10.

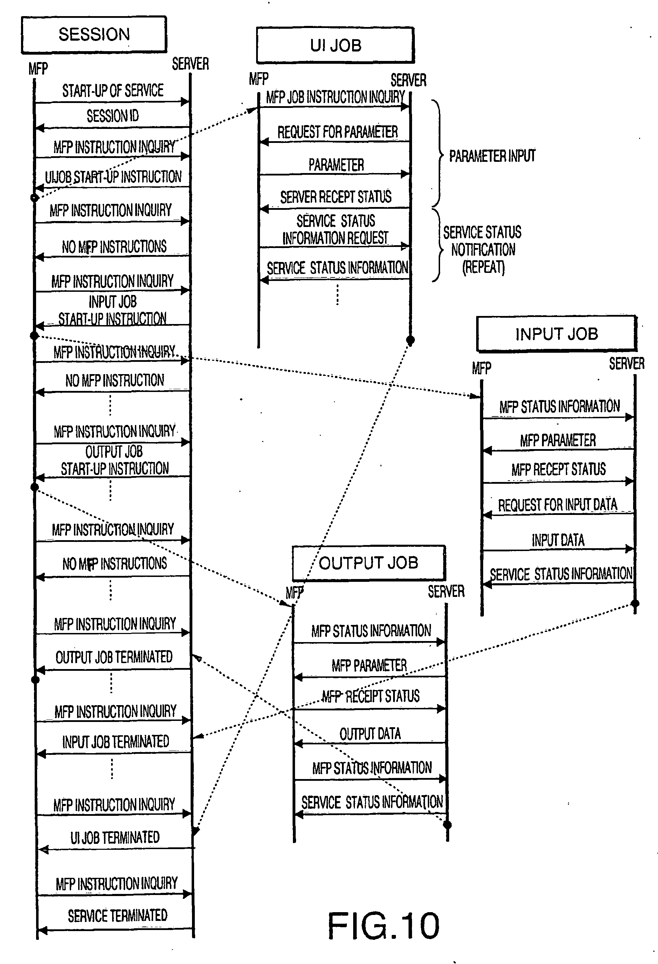

The communication performed between the MFP 10 and the function server 30 is explained below using the ladder chart in Fig. 10.

The MFP 10 and the function server 30 perform a chain of communication processes (i.e., a session) through a service activation to a service termination. In this session, the MFP 10 requests the function server 30 for a service to be activated. Then, the function server 30 transmits a session ID to the MFP 10. Here, the session ID is an identifier enabling the function server 30 to designate the session, and in the subsequent communication, the MFP 10 transmits the session ID along with the request, and the function server 30 designates the session based on this session ID. Thus, the function server 30 can process multiple sessions simultaneously.

When the session ID is received, the MFP 10 periodically inquires for an MFP instruction, which is an inquiry for instructions to the MFP 10, and receives the instructions in response to the inquiry from the function server 30. The function server 30 transmits a notice indicating there is no instruction (no MFP instruction) when there is no instruction to be sent in response to the MFP instruction inquiry.

In this example, the function server 30 first transmits a UI (user interface) job activation instruction to the MFP 10. Here, the UI job activation instruction refers to a notification when the usage of the UI device (operation panel 12a), provided in MFP 10, starts. Through this, a UI job communication process begins between the MFP 10 and the function server 30. This UI job communication process is performed in parallel with the session. A job ID (inherent identifier in the session) for enabling the function server 30 to designate the job is transmitted along with the UI job activation instruction from the function server 30 to the MFP 10. Then, in the UI job communication process, the MFP 10 transmits the session ID and the job ID along with the request, and the function server 30 designates the job based on the session ID and the job ID. Thus, the function server 30 can process multiple jobs simultaneously. The contents of the UI job communication process are described below.

Next, the function server 30 transmits an input job activation instruction to the MFP 10 according to a predetermined timing. The input job activation instruction refers to a notification when the usage of the input device (the reading unit 13 or the sound input unit 17), provided in MFP 10 starts. Thus, the input job communication process begins between the MFP 10 and the function server 30. This input job communication process is performed in parallel with the session. The job ID is transmitted along with the input job activation instruction from the function server 30 to the MFP 10. Then, in the input job communication process, the MFP 10 transmits the session ID and the job ID along with the request, and the function server 30 designates the job based on the session ID and the job ID. The contents of the input job communication process are described below.

Next, the function server 30 transmits an output job activation instruction to the MFP 10 in a predetermined timing. The output job activation instruction refers to a notification when the usage of the output device (the recording unit 13 or the sound output unit 17), provided in MFP 10 starts. Thus, the output job communication process begins between the MFP 10 and the function server 30. This output job communication process is performed in parallel with the session, as is in the UI job and the input job. The job ID is transmitted along with the output job activation instruction from the function server 30 to the MFP 10. Then, in the output job communication process, the MFP 10 transmits the session ID and the job ID along with the request, and the function server 30 designates the job based on the session ID and the job ID. The contents of the output job communication process are described below.

Next, the function server 30 transmits an output job completion instruction, which refers to a notification of the completion of an output job to the MFP 10 according to a predetermined timing.

Then, the function server 30 transmits an input job completion instruction, which refers to a notification of the completion of an input job to the MFP 10 according to a predetermined timing.

Next, the function server 30 transmits an UI job completion instruction, which refers to a notification of the completion of an UI job to the MFP 10 according to a predetermined timing.

Then, the function server 30 transmits a service job completion instruction, which refers to a notification of the completion of a service to the MFP 10 according to a predetermined timing.

Next, the UI job communication process is explained below.

In the UI job communication process, the MFP 10 inquires for an MFP job instruction, which is an inquiry for instructions to the MFP 10, to the function server 30. Then, the function server 30 transmits a parameter request to the MFP 10. The parameter request allows the user to set parameters required for performing the services, and the service I/F information 36 is transmitted along with the parameter request from the function server 30 to the MFP 10.

When the parameter request from the function server 30 is received, the MFP 10 displays the parameter input screen based on the service I/F information 36 in the display 52 of the operation panel 12a (for example, Fig. 8). Then, the MFP 10 transmits the parameters set by the user to the function server 30.

When the parameters from the MFP 10 are received, the function server 30 transmits a server reception status, which refers to a notification indicating whether the information from the MFP 10 has been received by the function server 30 successfully.

Then, after acknowledging that the function server 30 has received the parameters successfully by the server reception status received from the function server 30, the MFP 10 issues a service status information request, which is a request for information related to the service status, to the function server 30.

When the service status information request from the MFP 10 is received, the function server 30 transmits service status information, which refers to a notification of the statuses of the function server 30 and service, to the MFP 10.

Subsequently, the transmission of the service status information request and the service status information in response thereto is repeated.

Next, the input job communication process is explained below. In the input job communication process, the MFP 10 transmits MFP status information, which refers to information related to the status of the MFP 10, to the function server 30. Then, the function server 30 transmits MFP parameters to the MFP 10 as required. The MFP parameters are input device parameters set by the user in the UI job communication process.

When the MFP parameters are received from the function server 30, the MFP 10 transmits MFP reception status, which refers to a notification indicating whether information from the function server 30 has been received by the MFP 10, successfully.

Then, if the MFP parameters are transmitted, after acknowledging that the MFP 10 has received the parameters successfully by the MFP reception status received from the MFP 10, the function server 30 transmits an input data request, which is a request for input data corresponding to the job to the MFP 10. If the MFP parameters are not transmitted, after the MFP status information has been received, the function server 30 transmits an input data request to the MFP 10. Input data corresponding to the job is image data generated by the reading unit 13 if the job is a scan job (i.e., a job performed in a service related to image data generated by the reading unit 13) or PCM data, if the job is a voice input job (i.e., a job performed in a service related to sound data generated by the sound input unit 17).

When an input data request from the function server 30 is received, the MFP 10 prompts the user for an input operation (image reading operations and voice input operations) and transmits the input data generated as a result to the function server 30.

When the input data from the MFP 10 is received, the function server 30 transmits service status information, which refers to the status of the function server 30 and the service, to the MFP 10.

Next, the output job communication process is explained below. In the output job communication process, the MFP 10 transmits MFP status information, which refers to information related to the MFP 10 status, to the function server 30. Then, the function server 30 transmits MFP parameters to the MFP 10, as required. The MFP parameters are output device parameters set by the user in the UI job communication process.

When the MFP parameters are received from the function server 30, the MFP 10 transmits MFP reception status, which refers to a notification indicating whether information from the function server 30 has been received by the MFP 10 successfully.

Then, if the MFP parameters are transmitted, after acknowledging that the MFP 10 has received the parameters successfully by the MFP reception status received from the MFP 10, the function server 30 transmits output data to the MFP 10. If the MFP parameters are not transmitted, after the MFP status information has been received, the function server 30 transmits output data to the MFP 10. The output data refers to image data when the job is a print job (i.e., a job performed in a service related to image data expressing image to be printed by the recording unit 14) or PCM data when the job is a voice output job (i.e., a job performed in a service related to PCM data representing voice output by the sound output unit 18).

When output data from the function server 30 is received, the MFP 10 performs an output process (printing image and outputting voice),¥ based on the output data and transmits the MFP status information, which refers to information related to the status of the MFP 10, to the function server 30.

When the MFP status information is received from the MFP 10, the function server 30 transmits service status information, which refers to a notification of the statuses of the function server 30 and the service, to the MFP 10.

### MFP Process by MFP 10

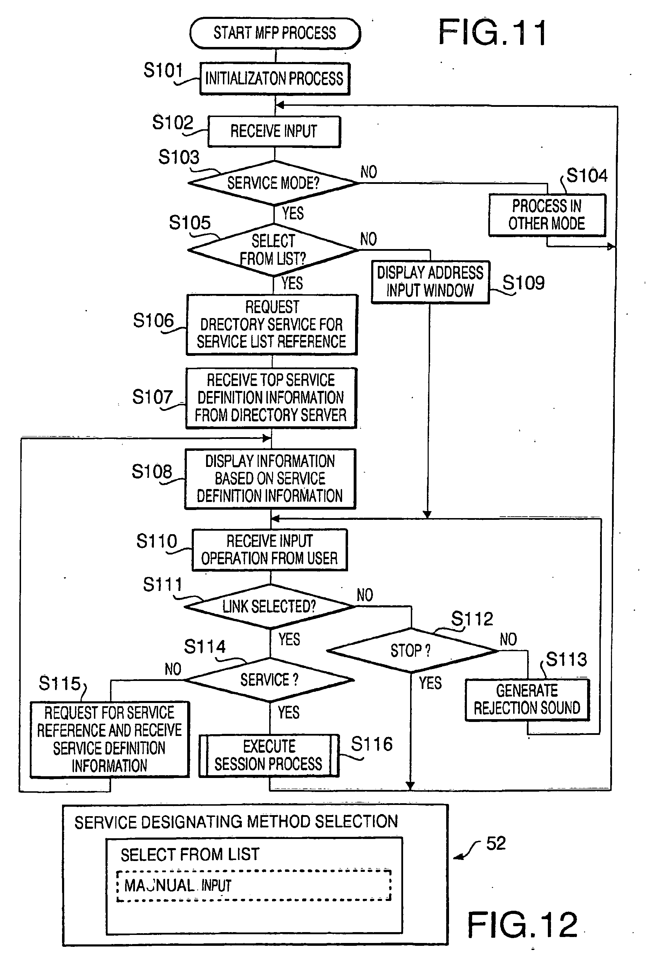

Referring to Fig. 11, an MFP process performed by the control unit 11 of the MFP 10 is explained below. The MFP process starts when the power is applied to the MFP 10.

When the MFP process is started, the process performs the initialization of the MFP 10 in S101.

Next in S102, the process receives input for starting any process in the MFP 10, for example, a key input on the operation panel 12a, and entry of instructions from a personal computer (not shown).

Then in S103, the process judges whether the input in S102 calls for a change of the operation mode to service mode, which requests the function server 30 for a service to be provided. Specifically, the process judges whether the input in S102 is an operation of pressing of the service key 44 on the operation panel 12a.

If the process determines in S103 that the input does not call for a change to the service mode, the process proceeds to S 104 and performs the process for another operation mode (for example, image print process) in accordance with the input in S102 and returns to S 102.

If the process determines in S 103 that the input calls for a change to the service mode, the process proceeds to S105, and judges whether to select from a list the service to be requested from the function server 30. Specifically, the process selects one of a method wherein the service is selected from a list or a method wherein the URL of the request destination of the desired service is directly input as a method, wherein the selection screen shown in Fig. 12 is displayed in the display 52 of the operation panel 12, and judges the service to be requested from the function server 30.
If the process determines that the service to be requested from the function server 30 will be selected from a list in S105 (i.e., "select from list" is selected), the process proceeds to S106, and requests the directory server 20 for the service list reference. Specifically, the process requests the director server 20 to transmit the top service definition information 25 (Fig. 3). In this example, the communication destination address (URL) for requesting the top service definition information 25 has been stored in the memory unit of the MFP 10 in advance.

Then, in S 107, the process receives the top service definition information 25, which is transmitted from the directory server 20 in response to the request in S106.

In S108, the process displays the service selection screen on the display 52 of the operation panel 12a (Fig. 5A) based on the service definition information 25 received in S107,, and proceeds to S 110.

If the process determines in S105 that the service requested from the function server 30 will not be selected from a list (i.e., "direct input" is selected), the process proceeds to S109, and displays the address input screen for directly entering the URL (not shown) in the display 52 of the operation panel 52, then proceeds to S 110.

In S 110, the process receives input operations by the user in the operation panel 12a for determining the service to be requested from the function server 30.

Next, the process judges whether the input operation received in S110 is an operation to select a link in S111. Specifically, when the selection operation is performed successfully, based on the information shown in S108, or when the URL is entered into the address input screen shown in S109 successfully, the process determines that the operation is selecting a link.

If the process determines in S111 that the operation is not for link selection, the process proceeds to S 112, and judges whether the input operation received in S110 is a termination operation for terminating the service mode.

If the process judges in S112 that the input operation is a termination operation for terminating service mode, the process returns to S102. In other words, the process in the service mode is terminated.

In S112, if the process judges that the input operation is not a termination operation, the process proceeds to S113 and returns to S101 after generating a rejection sound, for example, a buzzer. In other words, if the input operation received in S110 is not an operation for link selection or a termination operation, the process notifies the user with the rejection sound.

If the process judges in S111 that the operation is for link selection, the process proceeds to S 114, and judges whether the selected URL is the service URL.

If the process determines in S114 that the URL is not a service URL (i.e., it is a service definition information 25 URL), the process proceeds to S115, and requests the directory server 20 for a service reference (requests transmission of service definition information 25) based on the information indicated by Link_Location (information indicated by the URL, if the URL has been entered directly), and then receives the requested service definition information 25 from the directory server 20. Then, the process returns to S108. Through this, a new service selection screen is shown in the display 52 of the operation panel 12a.

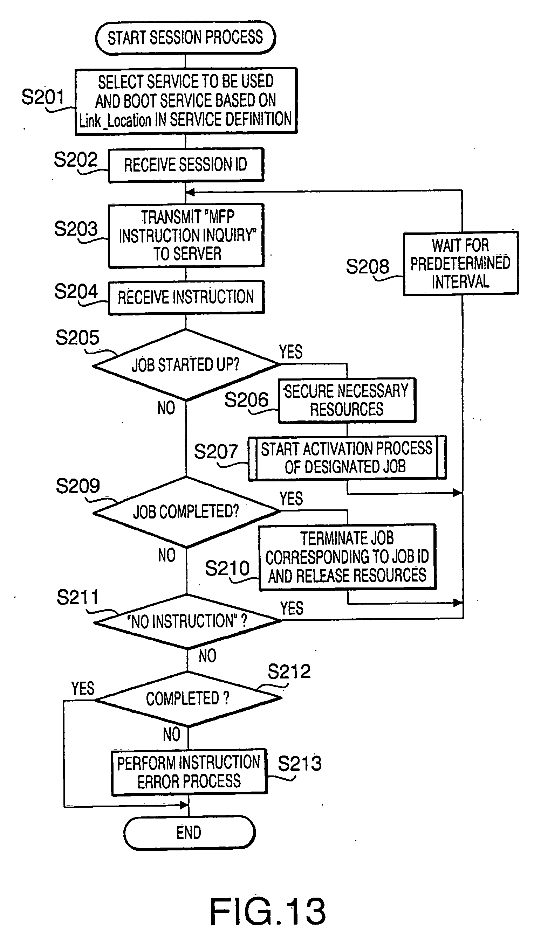

If the process determines that the URL is a service URL, the process proceeds to S 116, and after performing the session process (Fig. 13), described below, returns to S102.

### Session Process by MFP 10

Referring to Fig. 13, the session process performed in S 116 in the MFP process (Fig. 11) is explained bellow.

When this session process is started in S201, the process selects a service to be used, and activates the service, based on the Link_Location of the service definition information 25 (the URL, if URL has been entered directly). In other words, the process activates the service selected by the user by transmitting a service activation instruction to the service URL.

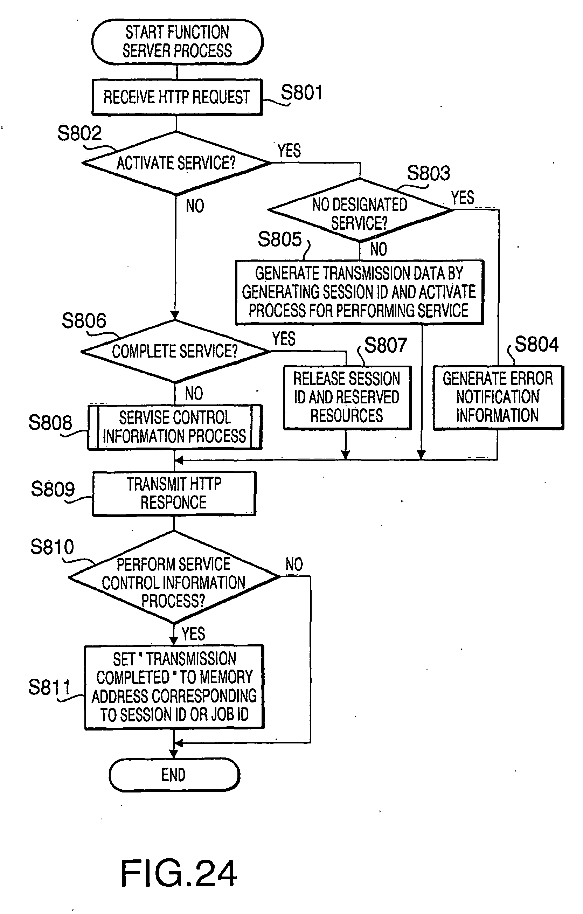

Next, the process receives a session ID from the function server 30 in S202. The session ID is generated in S805 in the function server process (Fig. 24), which is performed by the control unit 31 of the function server 30, and transmits the generated session ID in S809.

In S203, the process transmits an "MFP instruction inquiry" to the function server 30, which refers to an inquiry into instructions to the MFP. The session ID received in S202 is transmitted along with the MFP instruction inquiry.

Then, in S204, the process receives an instruction in response to the "MFP instruction inquiry" received in S203.

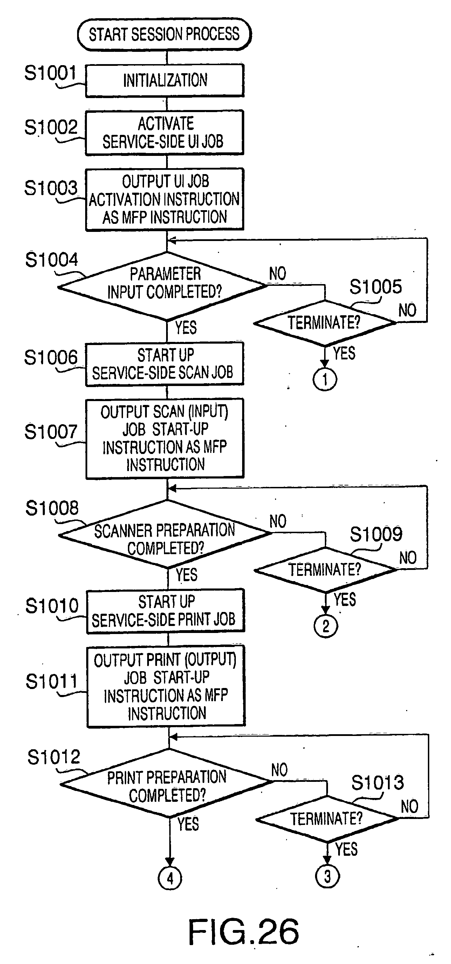

In S205, the process judges whether the instruction received in S204 is a job activation instruction. The process transmits job activation instructions respectively in S1003, S1007, and S1011, in the session process (Fig. 26), performed by the control unit 31 of the function server 30. The job ID and the job communication destination URL are transmitted along with the job activation instruction.

If the process determines in S205 that the instruction is a job activation instruction, the process proceeds to S206, reserves resources required for job activation, and proceeds to S207, and then starts the activation process of the designated job. Then, the process proceeds to S208, and after waiting for a predetermined interval, returns to S203.

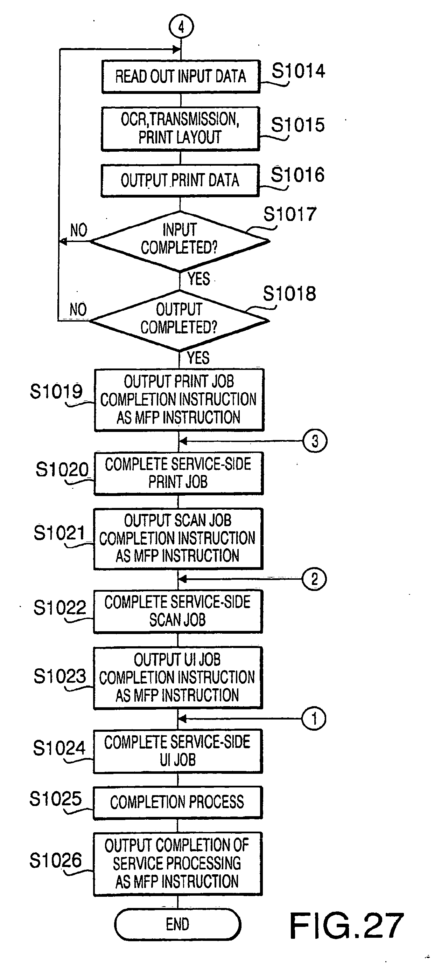

If the process determines in S205 that the instruction is not a job activation instruction, the process proceeds to S209, and judges whether the instruction received in S204 is a job completion instruction. The process transmits a job termination instructions respectively in S1019, S1021, and S1023, in the session process (Fig. 27), performed by the control unit 31 of the function server 30. The job ID that corresponds to the job to be terminated is transmitted along with the job activation instruction.

If the process determines in S209 that the instruction is a job termination instruction, the process proceeds to S210, terminates the job corresponding to the job ID, and releases the resources. Then, the process proceeds to S208 and, after waiting for a predetermined interval, returns to S203.

If the process determines in S209 that the instruction is not a job termination instruction, the process proceeds to S211, and judges whether the instruction received in S204 indicates "no instructions". In other words, the process judges whether the content transmitted in response to the "MFP instruction inquiry" transmitted in S203 indicates that there is no instruction.

If the process determines in S211 that the instruction received in S204 indicates "no instruction", the process proceeds to S208 and after waiting for a predetermined interval, returns to S203.

If the process determines in S211 that the instruction received in S204 does not indicate "no instruction", the process proceeds to S212 and judges whether the instruction received in S204 is a session termination instruction. The process transmits the session termination instruction in S1026 in the session process (Fig. 27) performed by the control unit 31 of the function server 30.

If the process determines in S212 that the instruction is a termination instruction, this session process is termination.

### Activation Process of a Designated Job by MFP 10

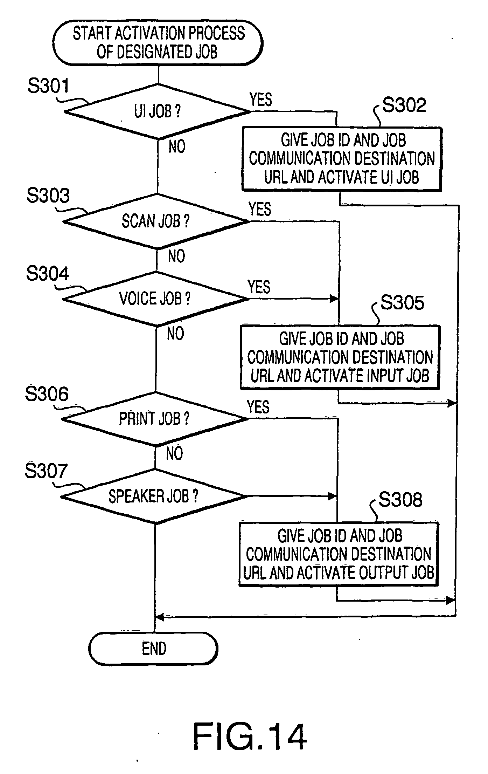

Referring to Fig. 14, the activation process of a designated job, which is started by the process in S207 in the session process (Fig. 13) is explained below.

When the activation process of the designated job is started, the process first judges in S301 whether the job designated in the job activation instruction is a UI job.

Then, if the process determines that the job designated in the job activation instruction is a UI job, the process proceeds to S302, and after a job ID and a job communication destination URL are passed, and the UI job is activated, completes the activation process of the designated job.

If the process determines that the job designated in the job activation instruction is not a UI job, the process proceeds to S303, and judges whether the job designated in the job activation instruction is a scan job.

If the process determines in S303 that the job designated in the job activation instruction is not a scan job, the process proceeds to S304, and judges whether the job designated by the job activation instruction is a voice job.

If the process determines in S304 that the job designated in the job activation instruction is not a voice job, the process proceeds to S306.

If the process determines in S303 that the job designated in the job activation instruction is a scan job, or determines in S304 that it is a voice job, the process proceeds to S305, and after the job ID and the job communication destination URL are passed, and the UI job is activated, completes the activation process of the designated job. The activation of different input jobs (i.e., input job 1 and input job 2) is instructed by setting the job activation instruction in the function server 30 such as to transmit either the service I/F information 36 of which the "Param_Adm" in the basic data is "1" (Fig. 6), or that of which the "Param_Adm" in the basic data is "2" (Fig. 7).

In S306, the process judges whether the job designated in the job activation instruction is a print job.

If the process determines in S306 that the job designated in the job activation instruction is not a print job, the process proceeds to S307, and judges whether the job designated in the job activation instruction is a speaker job.

If the process determines in S307 that the job designated in the job activation instruction is not a speaker job, or, in other words, the process determines that the job designated in the job activation instruction is none of a UI job, a scan job, a voice job, a print job, or a speaker job, the process terminates the activation process of this designated job.

If the process determines in S306 that the job designated in the job activation instruction is a print job or determines in S307 that it is a speaker job, the process proceeds to S308, and after the job ID and the job communication destination URL are passed, then the output job is activated, terminating the activation process of the designated job. The activation of different output jobs (i.e., output job 1 and output job 2) is instructed by setting the job activation instruction in the function server 30 side such as to transmit either the service I/F information 36 of which the "Param_Adm" in the basic data is "1" (Fig. 6), or that of which the "Param_Adm" in the basic data is "2" (Fig. 7),.

### UI Job by the MFP 10

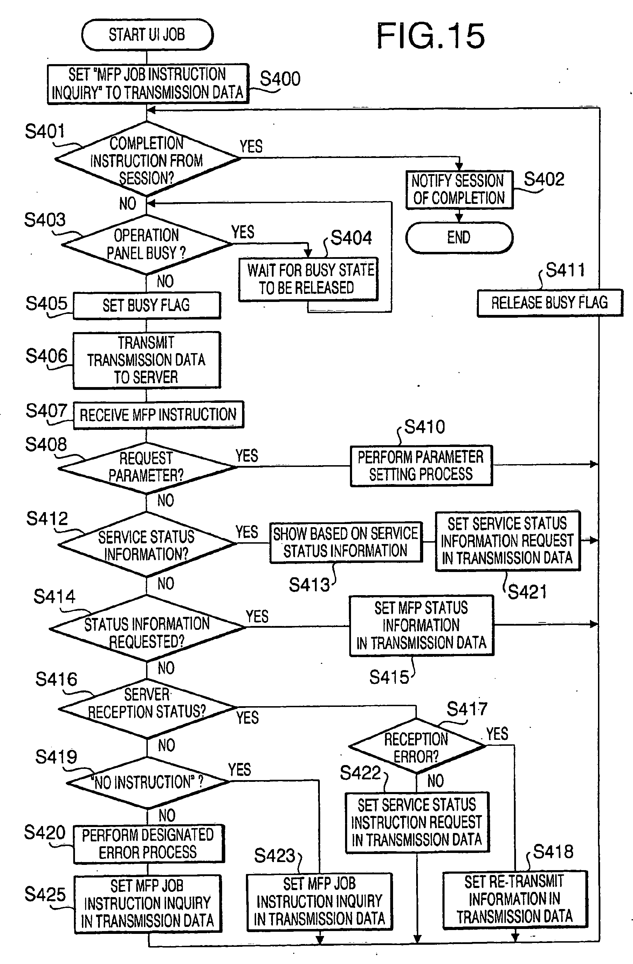

Referring to Fig. 15, a UI job activated such as to operate in parallel with the session process in S302 in the activation process of the designated job (Fig. 14) is explained below.

When the UI job is started in S400, the process writes an MFP job instruction inquiry, which is an inquiry for an instruction to the MFP 10, to a predetermined area as transmission data. This transmission data is information used in the process in S406, and the information written as this data is transmitted to the function server 30 with the session ID and the job ID. The storage area for the transmission data is provided to a predetermined area in the RAM, (not shown) which is provided to the control unit in the MFP 10.

Next, the process judges in S401 whether there was a termination instruction from the session. The process outputs the termination instruction from the session in S210 in the session process (Fig. 13) performed by the control unit 11 in the MFP 10.

If the process judges in S401 that there was a termination instruction from the session, the process proceeds to S402, and after passing a notification of termination to the session, terminates the UI job.

If the process judges that there is no termination instruction from the session, the process proceeds to S403, and judges whether the operation panel 12a is busy. Specifically, based on the busy flag (Fu) indicating whether the operation panel 12a is busy, the process judges that the operation panel 12a is busy if the busy flag Fu is set, and not busy if the busy flag Fu is released.

If the process judges in S403 that the operation panel 12a is busy, the process proceeds to S404, and after waiting for the operation panel 12a to be released from its busy state, returns to S403.

If the process judges that the operation panel 12a is not busy, the process proceeds to S405 and sets the busy flag Fu.

Then, in S406, the process transmits the information written as the foregoing transmission data to the function server 30, along with the session ID and the job ID.

Next, in S407, the process receives the MFP instruction that is returned in response to the information transmitted in S406.

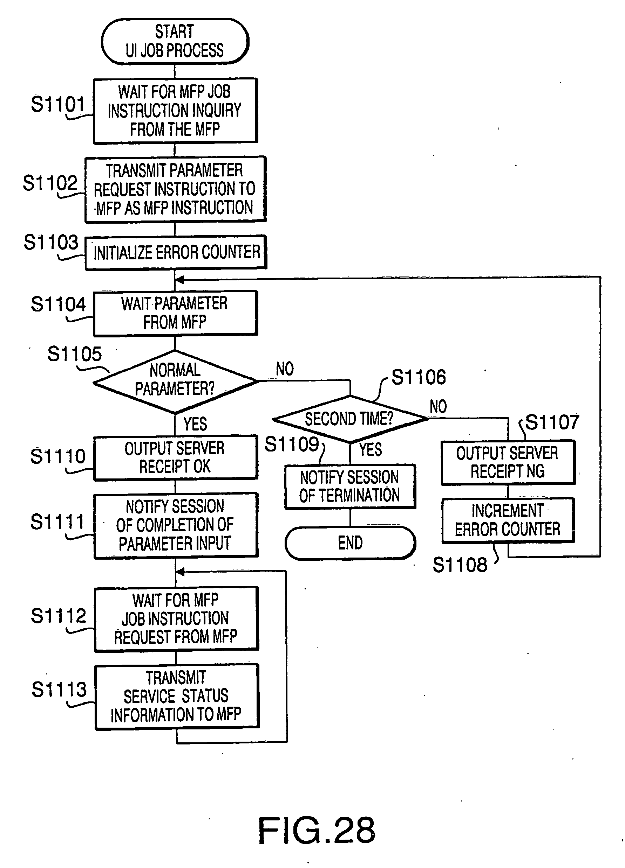

Then, the process judges in S408 whether the MFP instruction received in S407 is a parameter request. The process transmits the parameter request in S 1102 in the UI job process (Fig. 28), which is performed by the control unit in the function server 30.

If the process judges in S408 that the MFP instruction is a parameter request, the process proceeds to S410, and performs a parameter setting process. Then, the process proceeds to S411 and, after releasing the busy flag Fu, returns to S401.

If the process judges in S408 that the MFP instruction is not a parameter request, the process proceeds to S412, and judges whether the MFP instruction received in S407 is a service status information. The process transmits the service status information in S1113 in the UI job process (Fig. 28), which is performed by the control unit 31 in the function server 30. An error code and the service I/F information 36 are transmitted along with the service status information.

If the process judges in S412 that the MFP instruction is service status information, the process proceeds to S413, and displays information based on this service status information in the display 52 of the operation panel 12a. Then, the process proceeds to S421 and writes the service status information request in the transmission data storage area as transmission data, in order to transmit to the function server 30 a service status information request, which is an instruction requesting for information on the operation status of the service run by the function server 30. Then, the process proceeds to S411, and after releasing the busy flag Fu, returns to S401. The process subsequently transmits the service status instruction request written as transmission data to the function server 30 in S406, when there is no termination instruction from the session (S401: NO), and the operation panel is not busy (S403: NO).

If the process judges in S412 that the MFP instruction is not service status information, the process proceeds to S414 and judges whether the MFP instruction received in S407 is a status information request.

If the process judges in S414 that the MFP instruction is a status information request, the process proceeds to S415 and writes the MFP status information in the transmission data storage area as transmission data, in order to transmit to the function server 30 MFP status information, which is information related to the status of the MFP 10. Then, the process proceeds to S411 and after the busy flag Fu is released returns to S401. The session ID, the job ID and the error code are attached to the MFP status information. The process subsequently transmits the MFP status instruction written as transmission data to the function server 30 in S406, when there is no termination instruction from the session (S401: NO) and the operation panel is not busy (S403: NO).

If the process judges in S414 that the MFP instruction is not a status information request, the process proceeds to S416 and judges whether the MFP instruction received in S407 is a server reception status, which refers to a notification indicating whether the function server 30 received the information from the MFP 10 successfully.

If the process judges in S416 that the MFP information is a server reception status, the process proceeds to S417, and judges whether the content of the server reception status indicates a reception error.

Then, if the process judges in S417 that the content indicates a reception error, the process proceeds to S418, and writes information to be re-transmitted in the transmission data storage area as transmission data, in order to transmit previously transmitted information again. Then, the process proceeds to S411, and after the busy flag Fu is released, returns to S401.

If the process judges in S417 that the content does not indicate a reception error, the process proceeds to S411 after writing the service status information request to the transmission data storage area as transmission data, in order to transmit the service status information request, which is an instruction requesting information on the operation status of the service, in S422, and after releasing the busy flag Fu, returns to S401.

The process subsequently transmits to the function server 30 information to be re-transmitted, which is written as transmission data in S418 and S422, in S406 when there is no termination instruction from the session (S401: NO), and the operation panel is not busy (S403: NO).

If the process judges in S416 that the MFP instruction is not a server reception status, the process proceeds to S419 and judges whether the MFP instruction received in S407 indicates "no instruction". In other words, the process judges whether the content returned in response to the "MFP instruction inquiry" transmitted in S406 indicates that there is no instruction.

If the process judges in S419 that the MFP instruction received in S407 indicates "no instruction", the process proceeds to S411 after writing MFP job instruction inquiry in the transmission data storage area as transmission data, in order to transmit in S422 the MFP job instruction inquiry, which is an inquiry for an instruction to the MFP 10, and after releasing the busy flag Fu, returns to S401. The process subsequently transmits the MFP job instruction inquiry written as transmission data to the function server 30 in S406, when there is no termination instruction from the session (S401: NO) and the operation panel is not busy (S403: NO).

If the process judges in S419 that the MFP instruction received in S407 does not indicate "no instruction", the process proceeds to S420, and performs a designation error process. Then, after writing the MFP job instruction inquiry in the predetermined area as transmission data in S425, the process proceeds to S411, and after releasing the busy flag Fu, returns to S401.

### Parameter Setting Process by the MFP 10

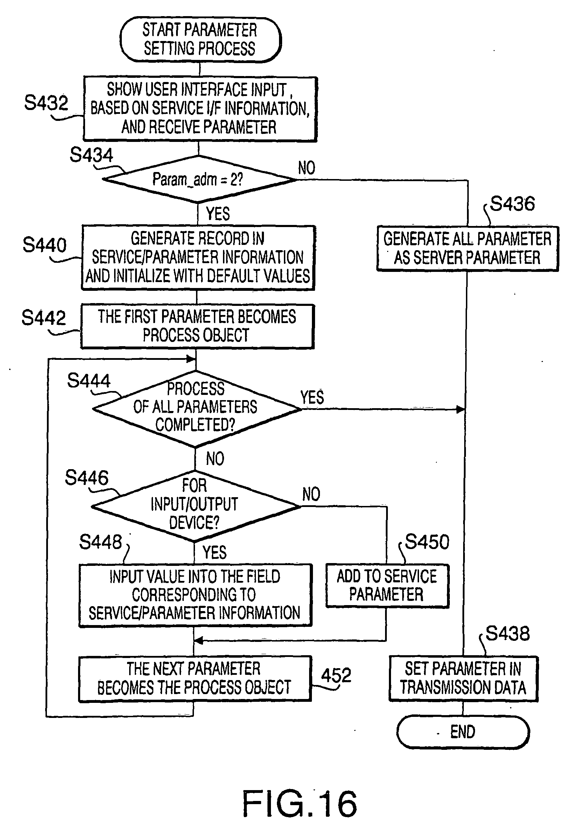

Referring to Fig. 16, the parameter setting process, which is started by the process in S410 in the UI job (Fig. 15) is explained below.

When the activation process of the designated job is started in S432, the process displays the parameter input screen in the display 52 of the operation panel 12a, based on the service I/F information 36, and prompts the user to perform input operations to set the parameters. When the input operations are performed in accordance with the parameter input screen, the contents of the service I/F information, which has been copied in order to temporarily store the parameters set by the user in accordance with the content, are changed, thus setting the parameters. The parameters set by the user are over-written in the area in the copies service I/F information 36 wherein, originally, the initial values of the parameters specified by the function server 30 are entered.

Next, the process proceeds to S434 and judges whether the value of "Param_Adm" in the basic data of the service I/F information received in the foregoing S407 is "2".

If the value of "Param_Adm" is not "2" or in other words is "1", the process proceeds to S436 and generates server parameters, wherein all the parameters specified in the service I/F information are registered, with regards to the service I/F information, wherein the parameters set by the user are reflected.

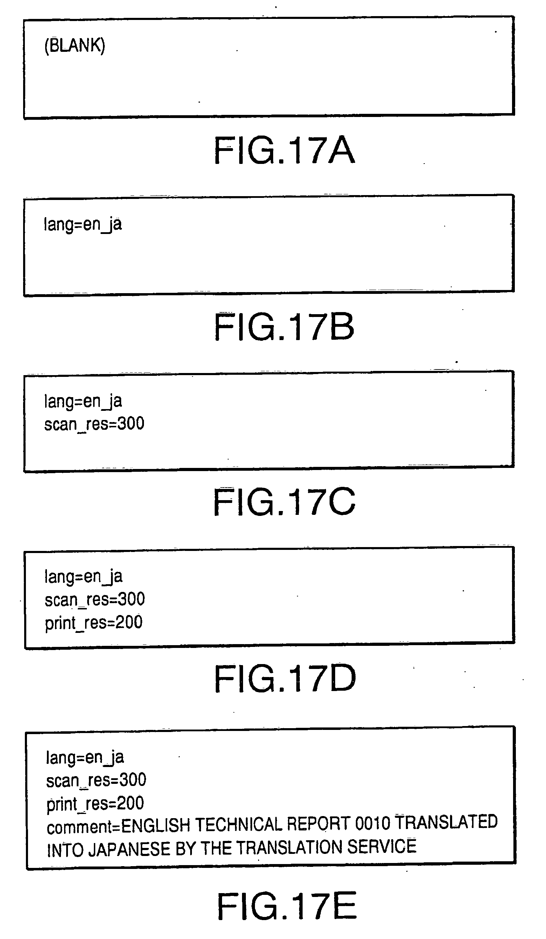

The process for generating server parameters based on the service I/F information shown in Fig. 6 is as follows. First, the value of "Disp_Value", which is enclosed by "Option" tags, wherein the "Default_Select" is set to "1", out of "Disp_Value" enclosed by the "Option" tag, is registered to the server parameter in the initialized state (blank) (see Fig. 17A) as the "Value_Name = lang" parameter in the first "Form_Elem" (see Fig. 17B). This is not merely registering of the value of "Disp_Value", but is performed in a state (refer to "lang =" in Fig. 17B) corresponding to the value of "Value_Name" (lang in this case). Next, the value of "Disp_Value", which is enclosed by "Opinion" tags, wherein the "Default_Select" is set to "1" is registered as the parameter of the "Value_Name = scan_res" in the second "Form_Elem" in the same way (refer to Fig. 17C). Then, the value of "Disp_Value", which is enclosed by "Opinion" tags wherein the "Default_Select" is set to "1" is registered as the parameter of the "Value_Name = print_res" in the third "Form_Elem" in the same way (refer to Fig. 17D). And, the value set in the "Default_String" is registered as the parameter of the "Value_Name = comment" in the fourth "Form_Elem" (refer to Fig. 17D). Each foregoing "Default_Select" value has changes (set) to the contents entered by the user by the foregoing input operation.

Then, the process proceeds to S438, and completes this parameter setting process after writing the server parameters in the transmission data storage area as transmission data in order to transmit server parameters generated as such to the function server 30. The session ID and the job ID are transmitted along with the server parameters. The process subsequently transmits the server parameters written as transmission data to the function server 30 in S406, when there is no termination instruction from the session (S401: NO), and the operation panel is not busy (S403: NO).

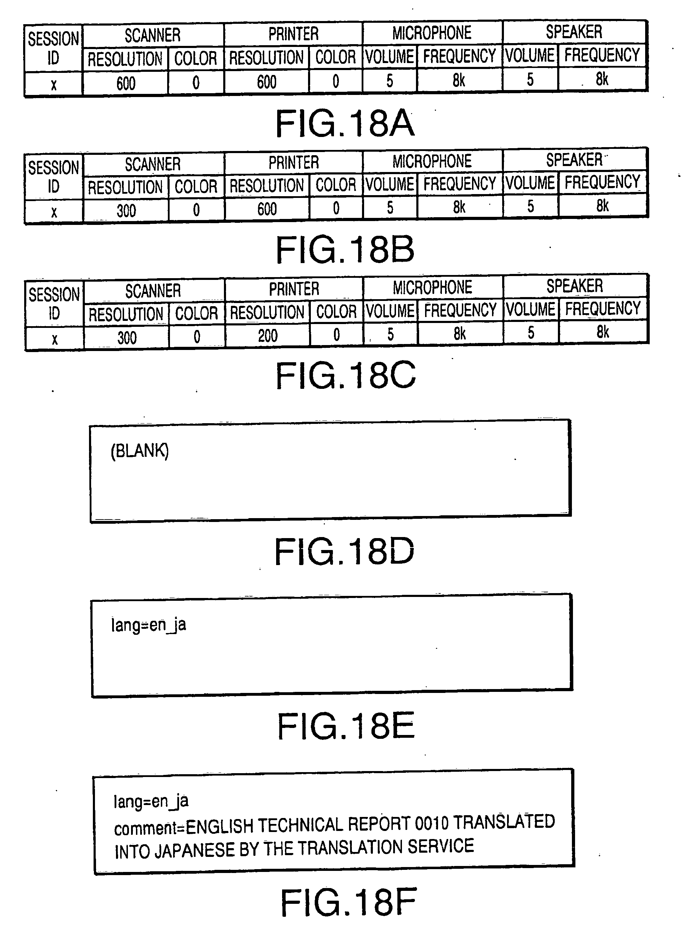

If the value of "Param_Adm" in S434 is "2", the process proceeds to S440, generates service parameter information, and initializes the value to the default value. The process generates service parameter information, which refers to a data table for registering the values set as the parameters (input device parameters) in order to implement the function provided to the MFP 10, and registers the setting values of the reading unit 13 (a scanner), recording unit 14 (a printer), sound input unit 17 (a microphone), and sound output unit 18 (a speaker) as the default values in the service parameter information (see Fig. 18A).

Next, in S442, the process processes the first parameter (the parameters corresponding to the first 'Torm_Elem") in the service I/F information 36 and determines in S444 whether the process for all parameters have been completed at this time.

When S444 is performed immediately after S442 the process for all parameters has obviously not been completed. Therefore, the process proceeds to S446 and judges whether the processed parameters are I/O (input/output) device parameters. Here, if the parameters are those related to the functions provided to the MFP 10, specifically parameters related to the reading unit 13 (the scanner), the recording unit 14 (the printer), the sound input unit 17 (the microphone), and the sound output unit 18 (the speaker), the process judges these to be I/O device parameters.

If the parameters are I/O device parameters in S446, the process proceeds to S448, and registers these parameters to the corresponding record in the service parameter information. If the parameters are not I/O device parameters, the process proceeds to S450, and registers these parameters to the server parameter. Then, the process proceeds to the next parameters (parameters corresponding to the n+1^{th} "Form_Elem"), and returns to S444.

Although S444 through S452 are performed on all the parameters, the procedure for generating the service parameter information and the server parameters, based on the service I/F information 36 shown in Fig. 7, are as follows. First, because the "Value-Name = lang" in the first "Form_Elem" is not an I/O device parameter, this parameter or in other words the value of "Disp_Value", which is enclosed by "Option" tags, wherein the "Default_Select" are set to "1", out of "Disp_Value" enclosed by "Option" tags, is registered to the server parameter in S450 (refer to Fig. 18E). Next, as the "Value_Name = scan_res" in the second "Form_Elem" is an I/O device parameter, this parameter or in other words the value of "Disp_Value", which is enclosed by "Opinion" tags, wherein the "Default_Select" is set to "1" is registered to the service parameter information in S448 (see Fig. 18B). Then, as the "Value_Name = print_res" in the third "Form_Elem" is an I/O device parameter, this parameter or, in other words, the value of "Disp_Value", which is enclosed by "Opinion" tags, wherein the "Default_Select" is set to "1" is registered to the service parameter information in S448 (see Fig. 18C). And, as the "Value_Name = comment" in the fourth "Form_Elem" is not an I/O device parameter, this parameter or in other words the value set in "Default_String" is registered to the server parameter in S450 (see Fig. 18F).

When the process of all the parameters are completed, the process proceeds to S438, and after setting the server parameters at this time to the transmission data and transmitting this to the function server 30 in S406 in Fig. 15, the parameter setting process is completed.

### Input Job 1 by the MFP 10

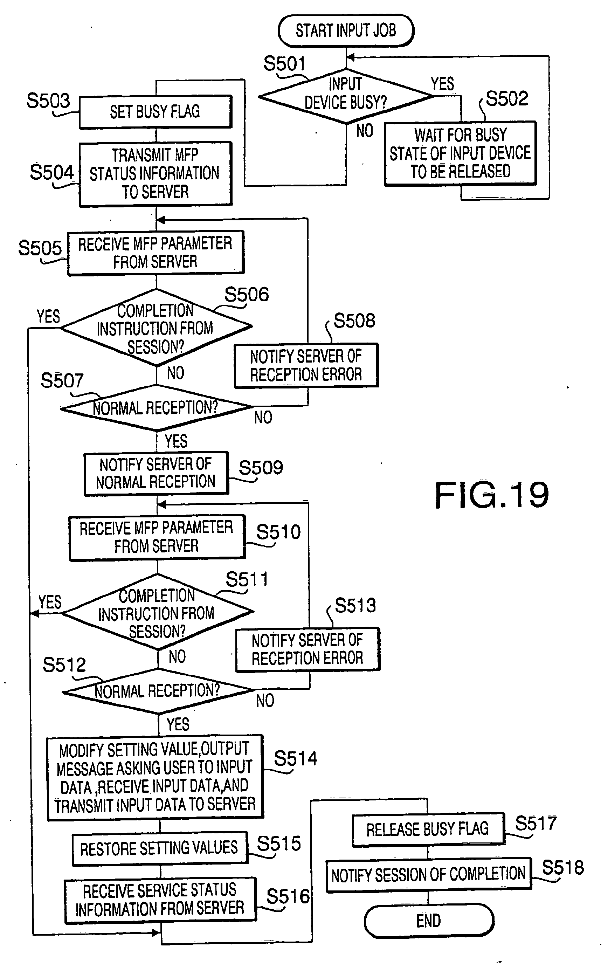

Referring to Fig. 19, an input job 1, which is activated such as to operate in parallel with the session process and UI job process in S302 in the activation process of a designated job (Fig. 14) is explained below. This input job 1 is activated when a job activation instruction from the function server 30 is received which is set to transmit the service I/F information 36 wherein the "Param_Adm" in the basic data is "1" (Fig. 6).

When the input job 1 is started, the process judges in S501 whether the input device (the reading unit 13, when the service is related to image data generated by the reading unit 13, and the sound input unit 17, when the service is related to sound data generated by the sound input unit 17) is busy. Specifically, the process determines the input device to be busy when the busy flag Fi is set, and not busy when the busy flag Fi is released, based on the busy flag Fi, which indicates whether the input device is in a busy state.

If the process determines in S501 that the input device is busy, the process proceeds to S502 and, after waiting for the input device to be released from its busy state, returns to S501.

If the process determines in S502 that the input device is not busy, the process proceeds to S503 and sets the busy flag Fi.

Next, the process transmits MFP status information to the function server 30 in S504. A session ID, a job ID, and an error code are transmitted along with the MFP status information.

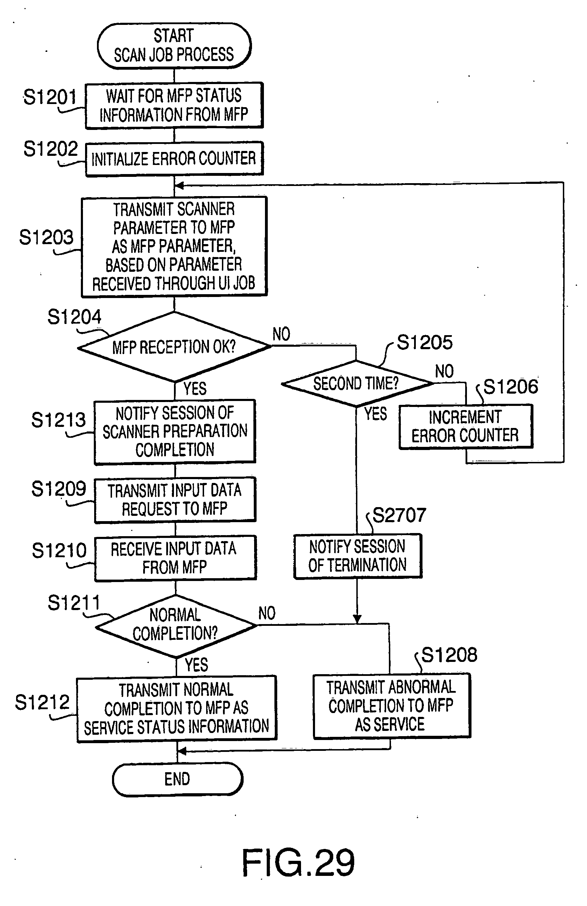

Then, in S505, the process receives the MFP parameters returned from the function server 30 in response to the "MFP status information", transmitted in S504. The process transmits the MFP parameter in S1203 in the scan job 1 process (Fig. 29), which is performed by the control unit 31 in the function server 30.

In S506, the process judges whether there was a termination instruction from the session. The process outputs the termination instruction from the session in S210 in the session process (Fig. 13) performed by the control unit 11 in the MFP 10.

If the process judges in S506 that there is no termination instruction from the session, the process proceeds to S507 and judges whether the MFP parameters were received normally in S505.

If the process judges in S507 that the MFP parameters were not received successfully, the process proceeds to S508, notifies the function server 30 of a reception error as MFP reception status, which refers to a notification on whether the MFP 10 has received information from the function server 30 successfully, and returns to S505. The session ID and the job ID are transmitted along with the MFP reception status.

If the process judges in S507 that the MFP parameters were received successfully, the process proceeds to S509 and notifies the function server 30 of normal reception as the MFP reception status.

Next, the process receives an input data request from the function server 30 in S510. The process transmits an input data request in S1209 in the scan job 1 process (Fig. 29), which is performed by the control unit 31 in the function server 30.

Then, in S511, the process judges whether there was a termination instruction from the session, as in S506.

If the process judges that there was no termination instruction from the session, the process proceeds to S512 and judges whether the input data request was received successfully in S510.

If the process judges in S512 that the input data request was not received successfully, the process proceeds to S513, notifies the function server 30 of a reception error, and returns to S510.

If the process judges in S512 that the input data request was received successfully, the process proceeds to S514, prompts the user to perform input operations (for example, display messages such as "Set manuscript and press OK key" and "Pick up receiver and speak" in the display 52 of the operation panel 12a), as well as change the setting values of the input device based on the MFP parameters, and transmits input data entered as such to the function server 30, sequentially. Input data can be input by reading image data stored in a semiconductor memory such as a memory card, inputting image data stored in memory unit 16, and the like. The session ID and the job ID are transmitted along with the input data.

Then, in S515, the process returns the setting of the input device changed to the original values in S514.

In S516, after receiving service status information from the function server 30, the process proceeds to S517. The process transmits the service status information in S1208 and S1212, respectively, in the scan job 1 process (Fig. 29), which is performed by the control unit 31 in the function server 30.

If the process judges in S506 or S511 that there was a termination instruction from the session, the process proceeds directly to S517.

In S517, the process releases the busy flag Fi set in S503.

Then, after notifying the session of completion, the process completes the input job 1.

### Input Job 2 by the MFP 10

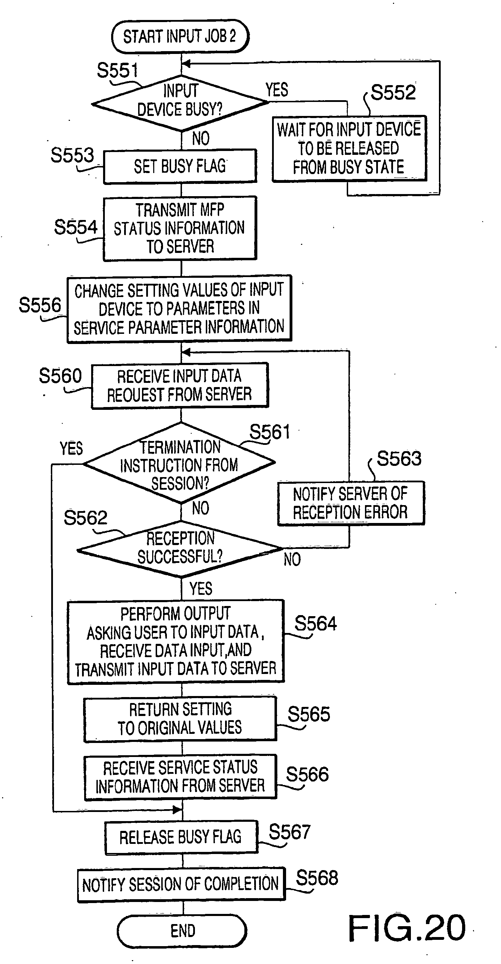

Referring to Fig. 20, an input job 2 which is activated such as to operate in parallel with the session process and UI job process in S305 in the activation process of a designated job (Fig. 14) is explained below. This input job 2 is activated when a job activation from the function server 30 instruction is received which is set to transmit the service I/F information 36, wherein the "Param_Adm" in the basic data is "2" (Fig. 7).

When the input job 2 is started, after performing S551 to S554, which are similar to S501 through S504, the process proceeds to S556 and changes the setting values of the input device in the MFP 10 to the parameters registered in the service parameter information. The setting values of input devices, the reading unit 13 (the scanner) and the sound input unit 17 (the microphone) are respectively changed to relevant parameters (the scanner and the microphone parameters) out of those registered in the service parameter information.

Next, the process performs S560 through S562, which are similar to S510 through S512, and if the process judges in S562 that the input data request was received normally, the process proceeds to S564, prompts the user to perform input operations, and sequentially transmits the input data input as such to the function server 30. The session ID and the job ID are transmitted along with the input data.

Then after returning each setting value change in S554 to the original values in S565, the process performs S565 through S568, which are similar to S515 through S518 in Fig. 19, and completes the input job 2.

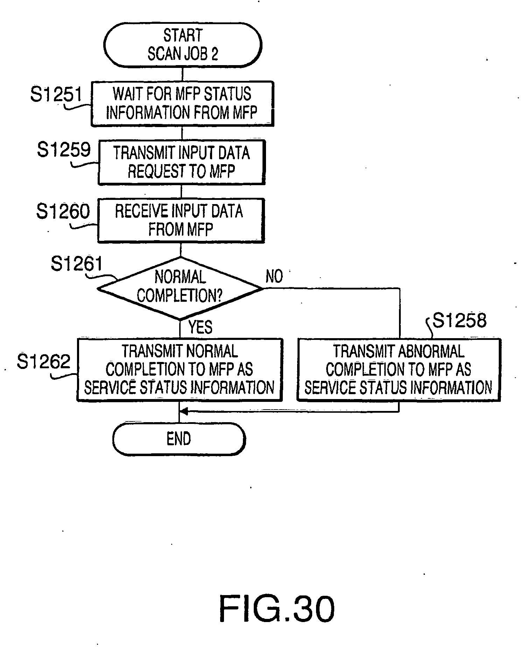

The process transmits the service status information received in S566, in S1258 and S1262 in the scan job 2 process (Fig. 30), which is performed by the control unit 31 in the function server 30.

### Output Job 1 by the MFP 10

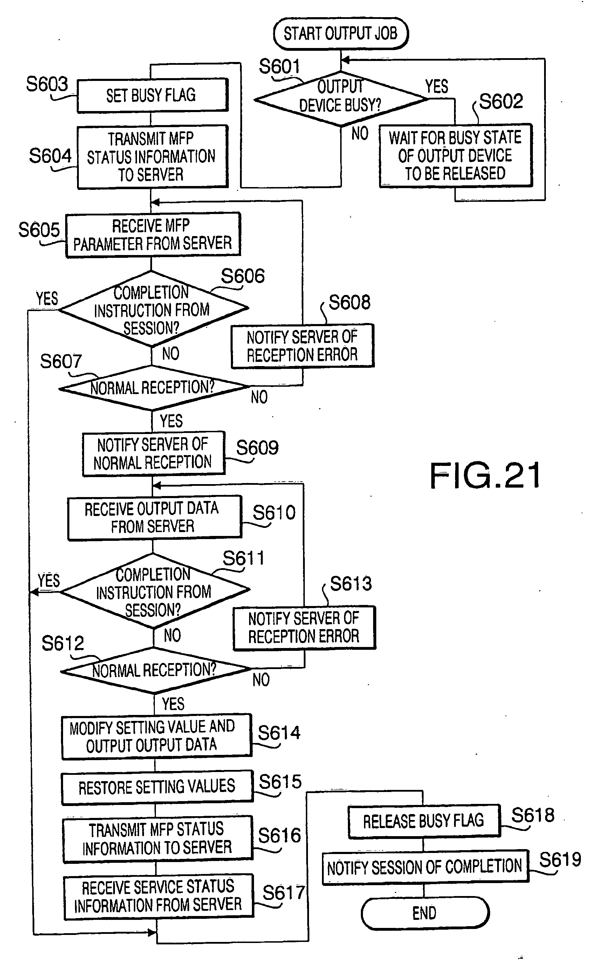

Referring to Fig. 21, an output job 1, which is activated such as to operate in parallel with the session process and UI job process in S308 in the activation process of a designated job (Fig. 14) is explained below. This output job 1 is activated when a job activation instruction is received from the function server 30, which is set to transmit service I/F information 36, wherein the "Param_Adm" in the basic data is "1" (Fig. 6).

When the output job 1 is started, the process judges in S601 whether the output device (the recording unit 14, when the service is related to image data representing the image printed by the recording unit 13, and the sound output unit 17, when the service is related to sound data output the sound output unit 17) is busy. Specifically, the process determines the output device to be busy when the busy flag Fo is set, and not busy when the busy flag Fo is released, based on the busy flag Fo, which indicates whether the output device is in a busy state.

If the process determines in S601 that the output device is busy, the process proceeds to S602 and, after waiting for the output device to be released from its busy state, returns to S601.

If the process judges in S602 that the output device is not busy, the process proceeds to S603 and sets the busy flag Fo.

Next, the process transmits MFP status information to the function server 30 in S604. The session ID, the job ID, and an error code are transmitted along with the MFP status information.

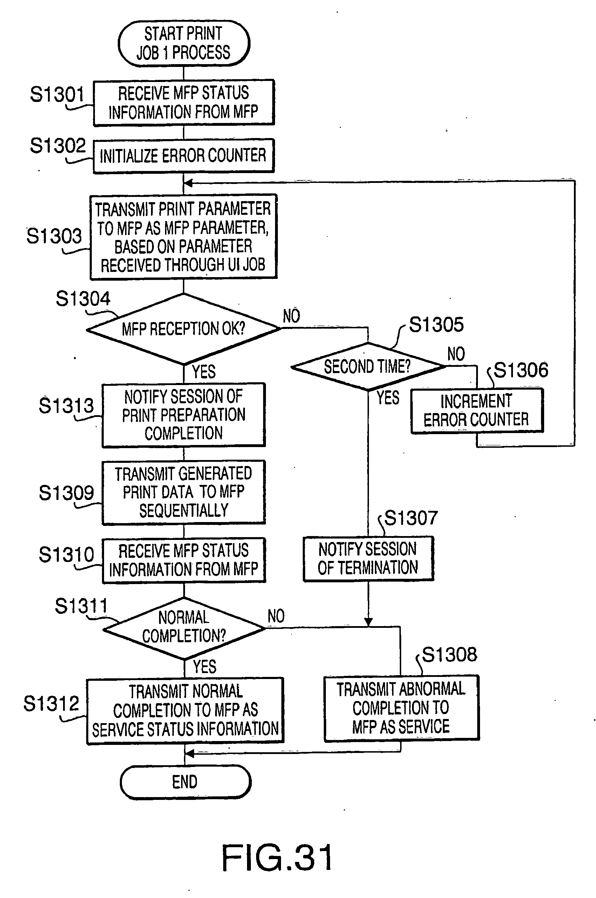

Then, in S605, the process receives the MFP parameters returned from the function server 30 in response to the "MFP status information", transmitted in S604. The process transmits MFP parameters in S1303 in the print job 1 process (Fig. 31), which is performed by the control unit 31 in the function server 30.

In S606, the process judges whether there was a termination instruction from the session. The process outputs the termination instruction from the session in S210 in the session process (Fig. 13) performed by the control unit 11 in the MFP 10.

If the process determines in S606 that there was no termination instruction from the session, the process proceeds to S607 and judges whether the MFP parameters were received successfully in S605.

If the process judges in S607 that the MFP parameters were not received successfully, the process proceeds to S608, notifies the function server 30 of a reception error as a MFP reception status, which refers to a notification on whether the MFP 10 has received information from the function server 30 successfully, and returns to S605. The session ID and the job ID are transmitted along with the MFP reception status.

If the process judges in S607 that the MFP parameters were received successfully, the process proceeds to S609 and notifies the function server 30 of normal reception as the MFP reception status.

Next, the process receives output data (for example, image data and sound data) from the function server 30 in S610. The process transmits output data in S1309 in the print job 1 process (Fig. 31), which is performed by the control unit 31 in the function server 30.

Then, in S611, the process judges whether there was a termination instruction from the session, as in S606.

If the process determines in S611 that there was no termination instruction from the session, the process proceeds to S612 and judges whether the output data was received successfully in S610.

If the process judges in S612 that the output data was not received successfully, the process proceeds to S613, notifies the function server 30 of a reception error, and returns to S610.

If the process determines in S612 that the output data was received successfully, the process proceeds to S614 and outputs output data (for example, a print image represented by image data and output voice represented by sound data), as well as changes the setting values of the output device based on the MFP parameters.

Then, in S615, the process returns the setting of the output device changed in S614 to the original values.

In S616, the process transmits MFP status information to the function server 30. The session ID, the job ID and an error code are transmitted along with the MFP status information.

Next, after receiving the service status information from the function server 30 in S617, the process proceeds to S618. The process transmits the service status information in S1308 and S1312, respectively, in the print job process (Fig. 31), which is performed by the control unit 31 in the function server 30.

If the process judges in S606 or S611 that there was a termination instruction from the session, the process proceeds directly to S618.

In S618, the process releases the busy flag Fo set in S603.

Then, after notifying the session of completion in S619, the process completes the output job 1.

### Output Job 2 by the MFP 10

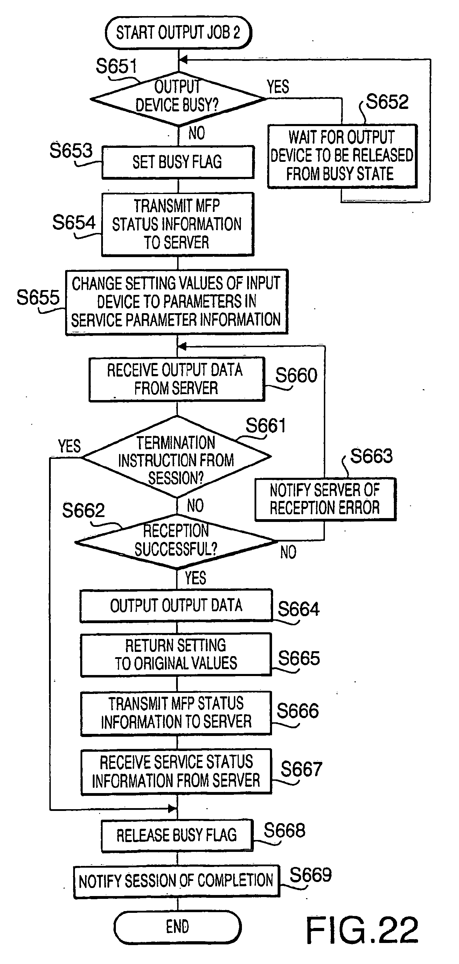

Referring to Fig. 22, an output job 2, which is activated such as to operate in parallel with the session process and UI job process in S308 in the activation process of a designated job (Fig. 14) is explained below. This output job 2 is activated when a job activation instruction from the function server 30 is received, which is set to transmit the service I/F information 36 wherein the "Param_Adm" in the basic data is "2" (Fig. 7).

When the output job 2 is started, after performing S651 through S654, which are similar to S601 to S604, the process proceeds to S655 and changes the setting values of the output device in MFP 10 to the parameters registered in the service parameter information. The setting values of output devices, the recording unit 14 (printer) and the sound output unit 18 (the speaker) are respectively changed to relevant parameters (the printer and the speaker parameters) out of those registered in the service parameter information.

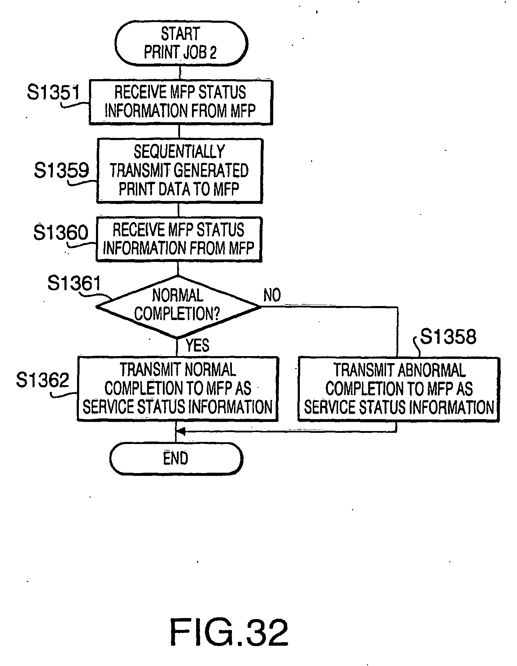

Next, the process performs S660 through S662, which are similar to S610 to S612, and if the process judges in S662 that the output data was received successfully, the output device outputs this output data. The process transmits the output data received in S660, in S1359 in the print job 2 process (Fig. 32), described hereafter, which is performed by the control unit 31 in the function server 30.

Then, after the process performs S665 to S669 which are similar to S615 to S619, the process completes the output job 2.

The process transmits the service status information received in S667, in S1358 and S 1362 in the print job 2 process (Fig. 32), described hereafter, which is performed by the control unit 31 in the function server 30.

### Directory Server Process by Directory Server 20

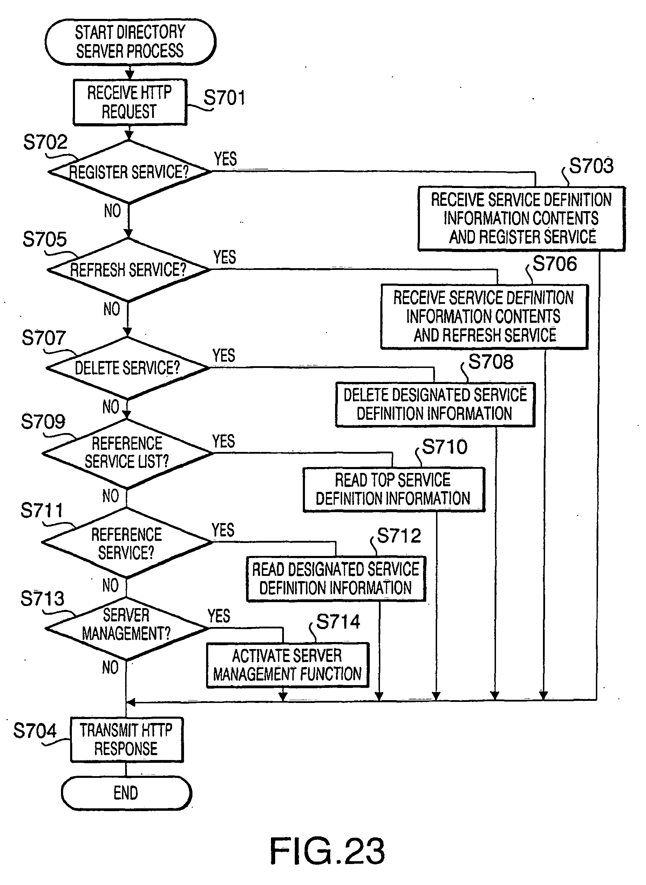

Directory server process, which is performed by the control unit 21 in the directory server 20, is explained below using the flowchart in Fig. 23. The directory server process is started when the directory server 20 receives an HTTP request.

When the directory server process is started, the process receives the HTTP request in S701.

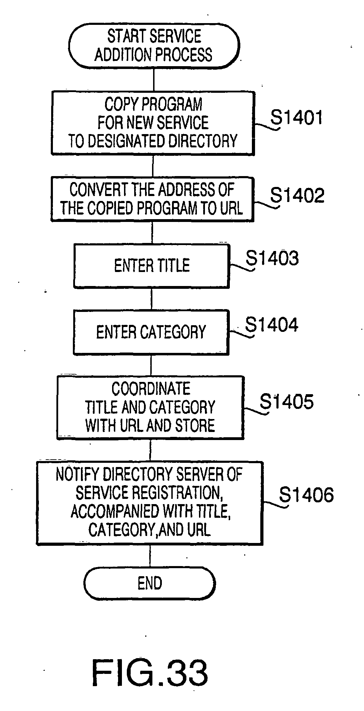

Next, the process judges in S702 whether the HTTP request received in S701 is a service registration instruction. The process transmits the service registration instruction in S 1406, in the service addition process (Fig. 33), which is performed by the control unit 31 in the function server 30.

If the process judges in S702 that the HTTP request is a service registration instruction, the process proceeds to S703, receives the contents of the service definition information 25, and registers the service. Specifically, information regarding a new service is registered to the service definition information 25 stored in the service definition information memory unit 24 of the memory unit 23. Then, the process proceeds to S704 and completes the directory server process after the HTTP response is transmitted.

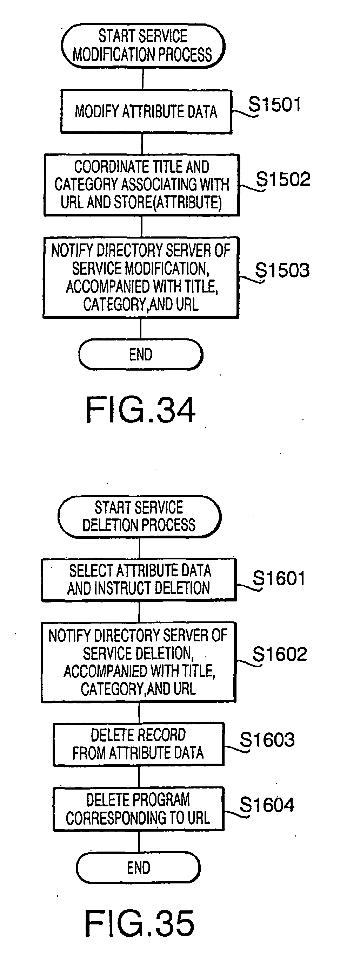

If the process judges in S702 that the HTTP request is not a service registration instruction, the process proceeds to S705 and judges whether the HTTP request received in S701 is a service renewal instruction (for example, change in the service request destination URL). The process transmits the service renewal instruction in S 1503 in the service alteration process (Fig. 34), which is performed by the control unit 31 in the function server 30.

If the process judges in S705 that the HTTP request is a service renewal instruction, the process proceeds to S706, receives the contents of the service definition information 25 and renews the service. Specifically, information regarding relevant services in the service definition information 25, which is stored in the service definition information memory unit 24 of the memory unit 23, is updated. Then, the process proceeds to S704 and completes the directory server process after transmitting the HTTP response.

If the process judges in S705 that the HTTP request is not a service renewal instruction, the process proceeds to S707 and judges whether the HTTP request received in S701 is a service deletion instruction. The process transmits the service deletion instruction in S 1602 in the service deletion process (Fig. 35), described hereafter, which is performed by the control unit 31 in the function server 30.

If the process judges in S707 that the HTTP request is a service deletion instruction, the process proceeds to S708 and deletes the designated service definition information 25. Specifically, information regarding relevant services in the service definition information 25, which is stored in the service definition information memory unit 24 of the memory unit 23, is deleted. Then, the process proceeds to S704 and completes the directory server process after the HTTP response is transmitted.

If the process judges in S707 that the HTTP request is not a service deletion instruction, the process proceeds to S709 and judges whether the HTTP request received in S701 is a service list reference request. The process transmits a service list reference request in S 106 in the foregoing MFP process (Fig. 11), which is performed by the control unit 11 in the MFP 10.

If the process judges in S709 that the HTTP request is a service list reference request, the process proceeds to S710 and reads the top service definition information 25 from the service definition information memory unit 24 in the memory unit 23. Then, the process proceeds to S704 and completes the directory server process after transmitting the HTTP response, which includes the read service definition information 25.

If the process determines in S709 that the HTTP request is not a service list reference request, the process proceeds to S711 and judges whether the HTTP request received in S710 is a service reference request. The process transmits a service reference request in S115 in the foregoing MFP process (Fig. 11), which is performed by the control unit 11 in the MFP 10.

If the process judges in S711 that the HTTP request is a service reference request, the process proceeds to S712 and reads the service definition information 25 designated by the ID or URL from the service definition information memory in the memory unit 23. Then, the process proceeds to S704 and completes the directory server process after transmitting the HTTP response which includes the read service definition information 25.

If the process judges in S711 that the HTTP request is not a service reference request, the process proceeds to S713 and judges whether the HTTP request received in S701 is a server management instruction for managing the directory server 20. The description on the process for transmitting the server management instruction is omitted, as it is not directly related to the present invention.

If the process judges in S713 that the HTTP request is a server management instruction, the process proceeds to S714 and activates the server management function. Then, the process proceeds to S704 and completes the directory server process after transmitting the HTTP response.

If the process determines in S713 that the HTTP request is not a server management instruction, the process proceeds directly to S704 and completes the directory server process after transmitting the HTTP response.

### Function Server Process by the Function Server 30

Referring to Fig. 24, a function server process, which is performed by the control unit 31 in the function server 30 is explained below. The function server process is started, when the function server 30 receives the HTTP request.

When the function server process is started, the process receives an HTTP request in S801.

Next, the process judges in S802 whether the HTTP request received in S801 is a service activation instruction. The process transmits a service activation instruction in S201 in the foregoing session process (Fig. 13), which is performed by the control unit 11 in the MFP 10.

If the process judges in S802 that the HTTP request is a service activation instruction, the process proceeds to S803 and judges whether the designated service exists.

Then, if the process judges in S803 that the designated service does not exist due to some sort of abnormality, the process proceeds to S804, generates error notification information, and proceeds to S809.

If the process judges in S803 that the designated service exists normally, the process proceeds to S805 and generates transmission data by generating session ID. A process for performing the service is also activated (specifically, the session process (Fig. 26), described hereafter is started). Then, the process proceeds to S809.

If the process judges in S802 that the HTTP request is not a service activation instruction, the process proceeds to S806 and judges whether the HTTP request received in S801 is a service termination instruction. The service termination instruction is transmitted from the MFP 10 in accordance with the termination instruction from the user (for example, pressing of the cancel key 51 when performing the service) received by the MFP 10 by an interruption process.

If the process determines in S806 that the HTTP request is a service termination instruction, the process proceeds to S807, releases the session ID and the reserved resources, and proceeds to S809.

If the process judges in S806 that the HTTP request is not a service termination instruction, the process proceeds to S808 and, after performing the service control information process, proceeds to S809. The service control information process is explained in detail hereafter (Fig. 25).

In S809, a transmission process of an HTTP response, which includes the generated information, is performed.

Then, the process judges, in S810, whether the service control information process in S808 was performed.

If the process determines in S810 that the service control information process has been performed, the process proceeds to S811 and completes the function server process after setting "transmission completed" to the memory address corresponding to the session ID or the job ID.

If the process determines in S810 that the service control information process has not been performed, the function server process is immediately completed.

### Service Control Information by the Function Server 30

Referring to Fig. 25, detailed contents of the service control information process performed in S808 in the function server process (Fig. 24) are explained below.

When the service control information process is started, the process judges in S901 whether information to be transmitted to the service exists. Specifically, the process judges whether the HTTP request received in S801 in the function server process (Fig. 24) includes information regarding service (a session or a job).

If the process determines in S901 that information exists to be transmitted to the service, the process proceeds to S902 and specifies a process to be transmitted, which corresponds to the session ID or the job ID. In other words, the process that becomes the transmission destination of the information included in the received HTTP request is specified.

Next, the process judges in S903 whether the process can be specified.

If the process judges in S903 that the process cannot be specified due to an erroneous condition, the process proceeds to S904 and completes the service control information process after generating error notification information.

If the process judges in S903 that the process can be specified, the process proceeds to S905 and, after transmitting information to the specified process, returns to S906.

If the process judges in S901 that there is no information to be transmitted to the service, the process proceeds directly to S906.

The storage memory for returned information corresponding to the session ID or the job ID is specified in S906.

Next, the process judges whether the storage memory can be specified.

If the process determines in S907 that the storage memory cannot be specified, the process proceeds to S904 and completes the service control information process after generating error notification information.

If the process determines in S907 that the storage memory can be specified, the process proceeds to S908 and judges whether information exists to be transmitted to the MFP 10.

If the process determines in S908 that there is information to be transmitted to the MFP 10, the process proceeds to S909 and completes the service control information process after generating an MFP control instruction based on the returned information.

If the process determines in S908 that there is no information to be transmitted to the MFP 10, the process proceeds to S910 and completes the service control information process after generating information without the MFP instruction.

### Session Process by Function Server 30

Referring to Figs. 26 and 27, a session process, which is performed by the control unit 31 in the function server 30, is explained below. 27. As the content of the session process differs from the service type, the explanation herein takes the translation copy service as an example. This session process is started such as to operate in parallel with the foregoing function server process (Fig. 24) in S805.

When the session process is started, the process performs initialization in S 1001.

Then, the process activates the UI job on the service side in S 1002. The UI job on the service side is explained in detail hereafter (Fig. 28).

Next, the process outputs a UI job activation instruction as the MFP instruction in S 1003. Specifically, the process writes the MFP instruction in the memory storing the returned information and subsequently acknowledges output when "transmission completed" is set in S811 in the foregoing function server process (Fig. 24). The job ID and the job communication destination URL are output along with the UI job activation instruction.

The process judges whether parameter input has been completed in S1004. Completion of the parameter input is judged by whether notification of parameter input completion has been made in S1111 in the UI job process (Fig. 28).

If the process determines in S1004 that the parameter input has not been completed, the process proceeds to S1005 and judges whether notification of termination has been passed. Notification of termination is passed in S 1109 in the UI job process (Fig. 28).

If the process judges in S1005 that the notification of termination has not been passed, the process returns to S 1004.

If the process determines in S1005 that notification of termination has been passed, the process proceeds to the process in S 1024.

If the process determines in S1004 that parameter input is completed, the process proceeds to S1006 and activates the scan job on the service side. The detained contents of the scan job on the service side are explained hereafter (Fig. 29 and Fig. 30).

Next, the process outputs a scan job (the input job) activation instruction as an MFP instruction in S 1007. The job ID and the job communication destination URL are output along with the scan job activation instruction.

Then, the process judges whether the scanner preparation is completed in S 1008. The process judges whether the scanner preparation is completed by receiving a notification from S1213 in the scan job 1 process (Fig. 29).

If the process determines in S 1008 that the scanner preparation has not been completed, the process proceeds to S1009 and judges whether the notification of termination has been passed. The notification of termination is passed in S1207 in the scan job 1 process (Fig. 29).

If the process judges in S1009 that there has been no notification of termination, the process returns to S 1008.

If the process judges in S1009 that a notification of termination has been passed, the process proceeds to S1022.

If the process judges in S1008 that the scanner preparation is completed, the process proceeds to S 1010 and activates the print job on the service side. The detained contents of the print job on the service side are explained hereafter (Fig. 31 and Fig. 32).

Next, the process outputs a print job (the output job) activation instruction as the MFP instruction in S 1011. The job ID and the job communication URL are output along with the print job activation instruction.

Then, the process judges in S1012 whether the print preparation has been completed. The process judges whether the print preparation is completed by receiving a notification from S1313 in the print job 1 process (Fig. 31).

If the process determines in S 1012 that the print preparation has not been completed, the process proceeds to S1013 and judges whether the notification of termination has been passed. The notification of termination is passed in S1307 in the print job 1 process (Fig. 31).

If the process judges in S1013 that there has been no notification of termination, the process returns to S 1012.

If the process determines in S1013 that the notification of termination has been passed, the process proceeds to S1020.

If the process judges in S1012 that the print preparation is completed, the process proceeds to S1014 and reads the input data (image data generated by the reading unit 13).

In S 1015, the process acknowledges the text included within the image by performing an OCR process on the image data read in S1014, translates the acknowledged text, and generates image data for printing by setting the print layout for the text after translation.

Next, in S1016, the process outputs the print image data generated in S1015.

Then, in S107, the process judges whether input of all the data is completed.

If the process judges in S1017 that the input has not been completed, the process returns to S1014.

If the process determines in S1017 that the input is completed, the process proceeds to S1018 and judges whether the output of all the data is completed.

If the process determines in S1018 that the output has not been completed, the process returns to S1014.

However, if the process determines in S1018 that the output has been completed, the process proceeds to S1019 and outputs the print job termination instruction as an MFP instruction. The job ID corresponding to the print job to be completed is output along with the print job termination instruction.

Next, in S1020, the process completes the print job on the service side.

In S1021, the process outputs a scan job termination instruction as the MFP instruction. The job ID corresponding to the scan job to be completed is output along with the scan job termination instruction.

Next, in S1022, the process completes the scan job on the service side.

In S1023, the process outputs a UI job termination instruction as the MFP instruction. The job ID corresponding to the UI job to be completed is output along with the UI job termination instruction.

Next, in S1024, the process completes the UI job on the service side.

Then, in S1025, the process performs a completion process (release of memory, and the like) and completes the session process after outputting the service completion as the MFP instruction in S1026.

### UI Job Process by Function Server 30

Referring to Fig. 28, a function server process in S1002 in the session process (Fig. 26) and the UI job process activated such as to operate in parallel with the session process are explained below.

When the UIjob process is started, the process receives an MFP job instruction inquiry from the MFP 10 in S1101. The process transmits the MFP instruction inquiry in S406 in the foregoing UI job (Fig. 15) performed by the control unit 11 in the MFP 10.

Then, in S 1102, the process transmits a parameter request instruction for setting the parameters necessary for performing the service to the MFP 10 as the MFP instruction. The service I/F information 36 (in this example, the service I/F information 36 corresponding to the translation copy service) stored in the service I/F information memory unit 34 in the memory unit 33 is transmitted along with the parameter request.

Next, in S 1103 the process initializes the error count.

Then, in S 1104 the process receives the parameters from the MFP 10. The process transmits the parameters in S406 in Fig. 15 via S438 in the foregoing parameter setting process (Fig. 16), which is performed by the control unit 11 in the MFP 10.

Next, in S1105, the process judges whether the parameter received in S 1104 is normal.

If the process judges in S1105 that the parameter is not normal, the process proceeds to S1106 and judges whether the parameter has been determined to be not normal twice. Specifically, the process judges this based on the error count initialized in S1103.

If the process judges in S 1106 that it is not the second time (it is the first time), the process proceeds to S 1107 and outputs a reception error as the server reception status, which notifies whether the function server 30 has received information from the MFP10 successfully. Furthermore, the process proceeds to S 1108 and, after incrementing the error count, returns to S1104.

If the process judges in S 1106 that it is the second time, the process proceeds to S1109 and completes the UI job process after notifying the session of termination.

If the process determines in S1105 that the parameters are normal, the process proceeds to S1110 and outputs server normal reception as the server reception status.

Next, in S1111, the process outputs parameter input completion to the session.

Then, in S 1112, the process receives the MFP job instruction inquiry from the MFP 10. The process transmits the MFP job instruction inquiry in S406 in the UI job (Fig. 15), as described above.

Next, in S1113, the process transmits service status information to the MFP 10.

Subsequently, the process returns to S1112. In other words, the process repeatedly receives the MFP job instruction inquiry from the MFP 10 and returns service status information until terminated by another process. An error code and the service I/F information 36 are transmitted along with service status information.

### Scan Job 1 Process by Function Server 30

Referring to Fig. 29, a function server process in S1006 in the session process (Fig. 26) and scan job 1 process which is activated such as to operate in parallel with the session process and the UI job process are explained below. This scan job 1 process is activated when the function server 30 is set to transmit the service I/F information 36, of which the "Param_Adm" in the basic data is "1" (Fig. 6).

When this scan job 1 process is started, the process receives the MFP status information from the MFP 10 in S1201. The process transmits the MFP status information in S504 in the foregoing input job (Fig. 19), which is performed by the control unit 11 in the MFP 10.

Next, in S1202, the process initializes the error count.

Then, in S1203, the process transmits the parameters of the scanner 13 to the MFP 10 as the MFP parameter based on the parameter received in S1104 in the UI job process (Fig. 28).

Next, in S1204, the parameter judges whether the MFP parameter has been received successfully by the MFP 10. Specifically, the process judges that the parameter has been received successfully when a notification of normal reception is passed as the MFP reception status, through the process in S509 in the foregoing input job 1 (Fig. 19), which is performed by the control unit 11 in the MFP 10, and determines that the parameter was not received successfully when the notification of an abnormal reception is passed as the MFP reception status.

If the process determines in S1204 that the MFP parameter has not been received successfully, the process proceeds to S1205 and judges whether the parameter has been received abnormally twice. Specifically, the process judges this based on the error counter initialized in S1202.

If the process determines in S1205 that it is not the second time (it is the first time), the process proceeds to S1206 and, after incrementing the error count, returns to S1203.

In the other hand, if the process determines in S1205 that it is the second time, the process proceeds to S1207 and notifies the session of termination. Furthermore, the process proceeds to S1208 and terminates the scan job process after transmitting an erroneous termination to the MFP 10 as the service status information.

If the process determines in S1204 that the MFP parameter has been received successfully, the process proceeds to S1213 and, after notifying the session of the completion of scanner preparation, the process proceeds to S1209 and transmits an input data request, which is an input request for the data type corresponding to the job, to the MFP 10.

Next, the process receives the input data from the MFP 10 in S1210. The process transmits the input data in S514 in the foregoing input job 1 (Fig. 19), which is performed by the control unit 11 in the MFP 10.

Then, in S1211, the process judges whether the completion is normal.

If the process judges in S1211 that it is not a normal completion, the process proceeds to S1208 and completes the scan job process after transmitting erroneous termination to the MFP 10 as the service status information.

If the process judges in S 1211 that it is a normal completion, the process proceeds to S1212 and completes the scan job 1 process after transmitting normal completion to the MFP 10 as the service status information.

### Scan Job 2 Process by Function Server 30

Referring to Fig. 30, a function server process in S 1006 in the session process (Fig. 26) and scan job 2 process, which is activated such as to operate in parallel with the session process and the UI job process are explained below. This scan job 2 process is activated when the function server 30 is set to transmit the service I/F information 36, of which the "Param_Adm" in the basic data is "2" (Fig. 7).

When this scan job 2 process is started, the process receives the MFP status information from the MFP 10 in S 1251. The process transmits the MFP status information in S554 in the foregoing input job 2 (Fig. 20), which is performed by the control unit 11 in the MFP 10.

Then, after the process performs S1259 through S 1262, which are similar to S1209 through S 1212 in Fig. 29, the process completes the scan job 2 process. The process transmits the input data received in S1260 in S564 in the foregoing input job 2 (Fig. 20) which is performed by the control unit 11 in the MFP 10.

Referring to Fig. 31, a function server process in S 1010 in the session process (Fig. 26) and the print job 1 process, which is activated such as to operate in parallel with the session process and the UI job process are explained below. This print job 1 process is activated when the function server 30 is set to transmit the service I/F information 36 of which the "Param_Adm" in the basic data is "1" (Fig. 6).

When this print job 1 process is started, the process receives the MFP status information from the MFP 10 in S1301. The process transmits the MFP status information in S604 in the foregoing output job (Fig. 21), which is performed by the control unit 11 in the MFP 10.

Next, in S1302, the process initializes the error count.

Then, in S1303, the process transmits the parameters of the printer to the MFP 10 as the MFP parameter based on the parameter received in S1104 in the UI job process (Fig. 28).

Next, in S1304, the parameter judges whether the MFP parameter has been received successfully by the MFP 10. Specifically, the process judges that the parameter has been received successfully when a notification of normal reception is passed as the MFP reception status through the process in S609 in the foregoing output job 1 (Fig. 21), which is performed by the control unit 11 in the MFP 10, and determines that the parameter was not received successfully when the notification of a reception error is passed as the MFP reception status.

If the process judges in S1304 that the MFP parameter has not been received successfully, the process proceeds to S1305 and judges whether the parameter has been determined to be received abnormally twice. Specifically, the process judges this based on the error counter initialized in S 1302.

If the process judges in S1305 that it is not the second time (it is the first time), the process proceeds to S 1306 and, after incrementing the error count, returns to S 1303.

If the process determines in S1305 that it is the second time, the process proceeds to S1307 and notifies the session of termination. Furthermore, the process proceeds to S1308 and terminates the print job process after transmitting an erroneous termination to the MFP 10 as the service status information.

If the process judges in S 1304 that the MFP parameter has been received successfully, the process proceeds to S 1313 and, after notifying the session of the completion of printer preparation, the process proceeds to S 1309 and transmits the generated print data to the MFP 10, successfully.

Next, the process receives MFP status information from the MFP 10 in S1310. The process transmits the MFP status information in S616 in the foregoing output job 1 (Fig. 21) which is performed by the control unit 11 in the MFP 10.

Then, in S1311, the process judges whether the completion is normal.

If the process judges in S 1311 that it is not a normal completion, the process proceeds to S1308 and terminates the print job 1 process after transmitting an erroneous termination to the MFP 10 as the service status information.

If the process judges in S1311 that it is a normal completion, the process proceeds to S1312 and completes the print job 1 process after transmitting normal completion to the MFP 10 as the service status information.

### Print Job 2 Process by Function Server 30

Referring to Fig. 32, a function server process in S 1006 in the session process (Fig. 26) and print job 2 process, which is activated such as to operate in parallel with the session process and the UI job process are explained below. This print job 2 process is activated when the function server 30 is set to transmit the service I/F information 36, of which the "Param_Adm" in the basic data is "2" (Fig. 7).

When this print job 2 process is started, the process receives the MFP status information from the MFP 10 in S1351. The process transmits the MFP status information in S654 in the foregoing output job 2 (Fig. 22), which is performed by the control unit 11 in the MFP 10.

Then, after the process performs S1359 through S1362, which are similar to S1309 through S 1312 in Fig. 31, the process completes the print job 2 process. The process transmits the MFP status information received in S 1360, in S666 in the foregoing output job 2 (Fig. 22), which is performed by the control unit 11 in the MFP 10.

### Service Addition Process by the Function Server 30

Referring to Fig. 33, a service addition process performed by the control unit 31 in the function server 30 is explained below. This service addition process is started when the administrator of the function server 30 performs predetermined operations.

When this service addition process is started, the process allows the administrator of the function server 30 to perform operations for copying the program of the service to be added (the service software 37) to the predetermined directory in S 1401.

Next, in S1402, the process converts the address of the program copied in S1401 to a URL.

Then, in S1403, the process allows the administrator of the function server 30 to enter the title of the added service (i.e., service name).

In S1404, the process allows the administrator of the function server 30 to enter the category of the added service. The category entered here can be any out of the three categories, "data storage service", "print service", and "copy service".

In S1405, the process stores the title entered in S1403 and the category entered in S1404 in correspondence to the URL generated by converting the address in S1402.

Then, the process notifies the directory server 20 of service registration, along with the title, category, and the URL stored in S1405. Subsequently, the service addition process is completed.

### Service Alteration Process by Function Server 30

Referring to Fig. 34, a service alteration process performed by the control unit 31 in the function server 30 is explained below. The service alteration process is started when the administrator of the function server 39 performs predetermined operations.

When this service alteration process is started, the process allows the administrator of the function server 30 to perform operations for the attribute data related to the service in S1501.

Next, in S 1502, the process stores the title and category of the service after alteration in correspondence to the URL.

Then, the process notifies the directory server 20 of the service alteration along with the title, category, and the URL, in S1503. Subsequently, the service alteration process is completed.

### Service Delete Process by Function Server 30

Referring to Fig. 35, a service delete process performed by the control unit 31 in the function server 30 is explained below. The service delete process is started when the administrator of the function server 39 performs predetermined operations.

When this service delete process is started, first the process allows the administrator of the function server 30 to indicate deletion by selecting attribute data, in S 1601.

Then, the process notifies the directory server 20 of the service deletion, along with the title, category, and URL in S1503.

In S1603, the attribute data is deleted from the record.

Then, in S1604, the program corresponding to the URL (the service software 37) is deleted. Subsequently, the service delete process is completed.

### Effect

In the image processing system configured as above, the MFP 10 is adapted to receive the service from the function server 30 and implement the function. This function can accommodate an environment wherein the number of services fluctuate everyday, such as a typical server on the internet, as it is implemented based on parameters specified by the user in accordance with the parameter input screen displayed in S432 in Fig. 16.

If, for example, the image processing system is configured to record information regarding new services to the MFP 10, as in the conventional configuration, new services cannot be received successfully, even if the information regarding the new service is registered to the MFP 10, if the specifications of the parameters necessary to perform the service is subsequently changed. In order to solve such issues, the setting procedure for the parameters accompanying the changes in the specifications can be controlled by the MFP 10. However, the workload to the MFP 10 increases, which is not preferable.

In the foregoing image processing system, as, by allowing the user to specify the parameters required for performing the service, the service can be acquired by the MFP 10 at all times and the workload to the MFP 10 can be reduced even when the specifications of the parameter have been altered.

Furthermore, as the process for allowing the user to specify the parameters is the process performed when a parameter request is received as an MFP instruction in S407 in Fig. 15, the MFP 10 can obtain parameters specified by the user after receiving the parameter request. Based on the obtained parameters , the functions provided to the device can be implemented in S514 in Fig. 19, S564 in Fig. 20, S614 in Fig. 21, and S664 in Fig. 22.

As the service by the function server 30 is performed when an operation for selecting a link or, in other words, an operation for receiving service provision is performed by the MFP 10 in S111 in Fig. 11, the user can receive the service at an arbitrary timing by performing this operation.

After the parameter obtained by the MFP 10 in S432 in Fig. 16 is set to the transmission data in S438, the notification is passed to the function server 30 in S406 in Fig. 15, and subsequently, the notification is passed to the MFP 10 from the function server 30 in S1203 in Fig. 29 and S 1303 in Fig. 31. Therefore, the MFP 10 implements the functions based on the parameters for which the notification is passed, and in this case, the MFP 10 itself is not required to manage the parameters. When the MFP 10 receives the notification of such parameters, it can implement the functions in S514 in Fig. 19 and S614 in Fig. 14 based on the parameters.

In S432 in Fig. 16, the MFP 10 can acquire multiple parameters including those related to I/O devices in the MFP 10 based on the service I/F information 36.

The MFP 10 can classify information included in the service I/F information 36 including the parameters specified by the user into parameters for I/O devices and other parameters in S440 to S452 in Fig. 16, and the parameters classified as those for I/O devices can be registered to the service parameter information. Then, the functions can be implemented using relevant parameters out of those registered in S564 in Fig. 20 and S664 in Fig. 22.

The functions can be implemented after changing the setting values of the device corresponding to the job being performed to the parameters of the device corresponding to the job being performed in S556 in Fig. 20 and S655 on Fig. 22 out of the parameters registered to service parameter information generated in S440 to S452 in Fig. 16.

As the setting values altered in S514, S556, S614, and S655 in Fig. 19 to Fig. 22 are returned to the original values in S515, S565, S615, and S665 in the same drawings, the functions are not implemented with the altered values set in situations other than the reception of the service by the function server 30.

Whether the MFP 10 transmits the server parameters to which all the parameters including those other than the I/O device parameters are registered in S436 in Fig. 16 in S406 in Fig. 15 via S438 in Fig. 16, or transmits server parameters to which parameters other than the I/O device parameters are registered,¥ in S406 in Fig. 15 via S440 to S452, can be changed as required by making settings such that "Param_Adm" is transmitted with its value set to either "1" or "2", in the function server 30. In other words, whether the I/O device parameters are managed by the MFP 10 or the function server 30 can be changed as required in accordance with the setting content on the function server 30 end.

### Variations

Although an illustrative embodiment of the present invention is described above, the present invention is not particularly limited to the foregoing illustrative embodiment, and can take on various aspects so long as they belong within the technical scope of the invention.

For example, although the MFP 10 is used as an image processing device in the foregoing illustrative embodiment, it can be a device other than the MFP, for example, a printer device, a scanner device, a facsimile device, and the like, so long as it is an image processing device that can receive a service provided by a function server, and can implement the function.

It should be noted that in the foregoing illustrative embodiment the function server 30 transmits a parameter request instruction along with the service I/F information 36. However, such a process for transmitting a parameter request instruction and the service I/F information 36 can be implemented by a device independent from the function server 30 (i.e., a single device or multiple devices operating in association).

In the foregoing illustrative embodiment, the service parameter information created in the process subsequent to S440 in Fig. 16 is managed within the MFP 10. However, this service parameter may be managed by another device (hereinafter referred to as "managing server"), which can communicate data with the MFP 10. In this case, the service parameter information is transmitted to the managing server in S438 and when referring to the service parameter information in a subsequent process, this managing server is accessed and the service parameter information is read (or only the necessary parameters are read).

In the foregoing illustrative embodiment, the function server 30 instructs the MFP 10 whether to manage the I/O device parameters by the MFP 10 or the function server 30, by transmitting the service I/F information 36, of which the "Param_Adm" is set to either "1" or "2" to the MFP 10 in S 1102 in Fig. 28. However, this instruction may be implemented through other methods. For example, the MFP 10 may change the management over the parameters in accordance with the instruction contents when the service I/F information 36, of which the "Param_Adm" is set to either "1" or "2", may be transmitted by the function server 30 in S1102 in Fig. 28, and whether the parameters are managed by the operation unit 12 when set to either is instructed (set) in the MFP 10. In other words, a configuration wherein whether the server parameters are generated or changed by any of S436 in Fig. 16 and S440 to S452 can be considered. In this case, the configuration in accordance with the process that instructs by which the parameter will be managed is equivalent to the managing unit in aspects of the present invention.

It should be noted that, although the MFP 10 first receives the top service definition information 25, among other service definition information 25 stored in the service definition information memory unit 24 of the directory server, and selects a category, then receives service definition information 25 corresponding to the selected category, and selects the service, it is not limited thereto. In other words, it can receive a plurality (for example, all) of pieces of the service definition information 25 stored in the service definition information memory unit 24 of the directory server 20 at once.

It should be noted that the parameter, for which the setting is requested by the service I/F information 36 is not limited to that passed as examples in the foregoing illustrative embodiment (resolution, and the like), and can be various things in accordance with the service content; for example, selection between black/white and color, toner concentration (printing density), and voice volume (sound volume).

The parameters which should not be set by the service I/F information 36 are not limited to either high parameters or low parameters. For example, if reading resolution can be selected from 200 dpi, 300 dpi and 600 dpi, 300 dpi can be not selectable and 200 dpi and 600 dpi can be selectable.

It should be noted that, although the service providing device in the foregoing illustrative embodiment includes one of each of the MFP 10, the directory server 20 and the function server 30, this configuration is merely an example to simplify the explanation, and the service providing device can have various other configurations. In other words, there can be multiple MFPs 10 in the service providing device according to aspects of the present invention. Specifically, multiple MFPs 10 can receive service definition information 25 from one common directory server 20, and can request one common function server 30 for a service.

It should be noted that there can be multiple directory servers 20 in the service providing device. Specifically, for example, one directory server 20 for transmitting the top service definition information 25 and another directory server 20 for transmitting the service definition information 25 of each category can be provided by independent servers.

It should be noted that multiple function servers 30 can be provided in the image system according to aspects of the present invention. Specifically, for example, one function server 30 for transmitting the service I/F information 36 and another function server 30 for performing the service can be provided by separate servers. Furthermore, one function server 30 for performing a session process and another function server 30 for performing a job process can be provided by separate servers. It should be noted that, for example, multiple function servers 30 can perform respective services, such as one function server 30 for performing service A, one function server 30 for performing service B to service D, another function server 30 for performing services E and F. In this case, the function server 30 that performs the service can transmit the service I/F information 36 corresponding to this service, or a function server 30 can be separate from the function server 30 performing the service.

It should be noted that the directory server 20 or a part of the constituent elements of the directory server 20, and the function server 30 or a part of the constituent elements of the function server 30 can be a single device that operate in association with other devices including other constituent elements.

It should be noted that the directory server 20 (or a part of the constituent elements of the directory server 20) and the function server 30 (or a part of the constituent elements of the function server 30) can be included in the MFP 10 of the service providing device.

## Claims

1. An image processing system, comprising:
an image processing device (10) for performing at least one of the functions of scanning an image, generating image data representing an image and printing an image represented by image data, and
a service providing device (30) for providing a service concerning at least one of the image data generated by the image processing device (10) and the image data representing the image to be printed, in response to a request from the image processing device (10), the service providing device (30) comprising a storage means (34) adapted to store service interface information (36) including information corresponding to each service which can be provided by the service providing device (30) and can be performed by the image processing device (10);
wherein the image processing device (10) comprises:
a service requesting means (11, 15) for requesting that the service providing device (30) provide the service; and
after receiving said request to perform a service from the image processing device (10), the service providing device (30) is adapted:
to send stored service interface information relating to said requested service to the image processing device to cause a representation of said stored service interface information relating to said requested service to be displayed; and to enable a user of the image processing device to set one or more parameters for the service based on said stored service interface information relating to said requested service;
the image processing device comprising a parameter specifying means (11, 12) adapted to allow the user to set said parameters and comprising an acquired parameter notifying means for notifying the service providing device (30) of the parameters obtained by the parameter specifying means (11, 12);
the service providing device (30) includes an implementation parameter notifying means (31, 32) for notifying the image processing device (10) of the implementation parameters necessary to implement a said function provided by the function implementation means (13, 14),
wherein the image processing device (10) is provided with a parameter classifying means (11) for classifying the parameters obtained by the parameter specifying means (11, 12) into one of a first parameter group concerning functions that are equipped in the image processing device (10) and a second parameter group concerning services provided by the service providing device (30),
the acquired parameter notifying means is adapted to notify the parameters classified into the second parameter group to the service providing device (30), and
the function implementation means (13,14) is adapted to implement the function equipped in the image processing device (10) based on the parameters classified into the first parameter group and notified by the implementation parameter notifying means (31, 32), and the service providing device is adapted to perform services based on the second parameter group.

2. The image processing system according to claim 1,
wherein information transmitted from the acquisition requesting means (31, 32) of the service providing device (30) to the image processing device (10) for requesting the image processing device (10) to obtain the parameters includes service interface information (36) for the image processing device (10) to display a parameter input screen for setting a plurality of parameters including parameters concerning functions equipped in the image processing device (10) and parameters concerning services provided by the service providing device (30).

3. The image processing system according to claim 1 or claim 2,
wherein the image processing device (10) is provided with a parameter registering means (11, 16) for registering the parameters classified into the first parameter group by the parameter classifying means (11), and
the function implementation means (13,14) is adapted to implement the settings of the function equipped in the image processing device (10) based on the parameters notified by the implementation parameter notifying means and the parameters registered by the parameter registering means (11, 16).

4. The image processing system according to claim 1,
wherein the parameter specifying means (11, 12) is adapted to specify the parameters that correspond to a plurality of respective services,
the service requesting means (11, 15) is adapted to request the service providing device (30) for the service that is specified by the predetermined operation of a user,
the acquired parameter notifying means is adapted to notify the service providing device (30) of the parameters obtained from the parameter specifying means (11, 12), and
the parameter registering means is adapted to register the parameters classified into the first parameter group by the parameter classifying means (11).

5. The image processing system according to claim 1, comprising:
a determining means for determining whether the service interface information (36) received from the service providing device (30) is service interface information (36) of a first type or a second type,
wherein, when the determining unit determines that the service interface information (36) received from the service providing device (30) is the service interface information (36) of the first type, the acquired parameter notifying means notifies the service providing device (30) of the parameters grouped in the second parameter group, and
wherein, when the determining unit determines that the service interface information (36) received from the service providing device (30) is the service interface information (36) of the second type, the acquired parameter notifying means notifies the service providing device (30) of both the parameters grouped in the first parameter group and the parameters grouped in the second parameter group.

6. An image processing device (10) for performing at least one of the functions of scanning an image, generating image data representing an image and printing an image represented by image data, for use in an image processing system comprising the image processing device and a service providing device (30) for providing a service concerning at least one of the image data generated by the image processing device (10) and the image data representing the image to be printed, in response to a request from the image processing device (10), the service providing device (30) comprising a storage means (34) adapted to store service interface information (36) including information corresponding to each service which can be provided by the service providing device (30) and can be performed by the image processing device (10);
the image processing device (10) comprising:
a service requesting means (11, 15) for requesting that the service providing device (30) provide the service; and
in response to receiving service interface information relating to said requested service from the service providing device (30), causing a representation of said stored service interface information relating to said requested service to be displayed to enable a user of the image processing device to set one or more parameters for the service based on said stored service interface information relating to said requested service;
the image processing device comprising a parameter specifying means (11, 12) adapted to allow the user to set said parameters and comprising an acquired parameter notifying means for notifying the service providing device (30) of the parameters obtained by the parameter specifying means (11, 12);
means for receiving implementation parameters necessary to implement a said function provided by the function implementation means (13, 14),
wherein the image processing device (10) is provided with a parameter classifying means (11) for classifying the parameters obtained by the parameter specifying means (11, 12) into one of a first parameter group concerning functions that are equipped in the image processing device (10) and a second parameter group concerning services provided by the service providing device (30),
the acquired parameter notifying means is adapted to notify the parameters classified into the second parameter group to the service providing device (30), and
the function implementation means (13,14) is adapted to implement the function equipped in the image processing device (10) based on the parameters classified into the first parameter group and notified by the implementation parameter notifying means (31, 32).

7. A computer program product comprising computer implementable instructions for causing a computer system to function as an image processing system, comprising:
an image processing device (10) for performing at least one of the functions of scanning an image, generating image data representing an image and printing an image represented by image data, and
a service providing device (30) for providing a service concerning at least one of the image data generated by the image processing device (10) and the image data representing the image to be printed, in response to a request from the image processing device (10), the service providing device (30) comprising a storage means (34) adapted to store service interface information (36) including information corresponding to each service which can be provided by the service providing device (30) and can be performed by the image processing device (10);
wherein the image processing device (10) performs the steps of:
requesting that the service providing device (30) provide the service; and
after receiving said request to perform a service from the image processing device (10), the service providing device (30) performs the steps of:
sending stored service interface information relating to said requested service to the image processing device to cause a representation of said stored service interface information relating to said requested service to be displayed; and to enable a user of the image processing device to set one or more parameters for the service based on said stored service interface information relating to said requested service;
the image processing device performing the further steps of: allowing the user to set said parameters and notifying the service providing device (30) of the obtained parameters;
the service providing device (30) performs the step of notifying the image processing device (10) of the implementation parameters necessary to implement a said function provided by the function implementation means (13, 14),
wherein the image processing device (10) further performs the steps of:
classifying the obtained parameters into one of a first parameter group concerning functions that are equipped in the image processing device (10) and a second parameter group concerning services provided by the service providing device (30), notifying the parameters classified into the second parameter group to the service providing device (30), and
implementing the function equipped in the image processing device (10) based on the parameters classified into the first parameter group and notified by the implementation parameter notifying means (31, 32); and
the service providing device performs services based on the second parameter group.

8. A computer program product comprising computer implementable instructions for causing a computer system to function as an image processing device (10) for performing at least one of the functions of scanning an image, generating image data representing an image and printing an image represented by image data, for use in an image processing system comprising the image processing device and a service providing device (30) for providing a service concerning at least one of the image data generated by the image processing device (10) and the image data representing the image to be printed, in response to a request from the image processing device (10), the service providing device (30) comprising a storage means (34) adapted to store service interface information (36) including information corresponding to each service which can be provided by the service providing device (30) and can be performed by the image processing device (10);
wherein the image processing device (10) performs the steps of:
requesting that the service providing device (30) provide the service; and
in response to receiving stored service interface information relating to said requested service from the service providing device to causing a representation of said stored service interface information relating to said requested service to be displayed enabling a user of the image processing device to set one or more parameters for the service based on said stored service interface information relating to said requested service;
**the image processing device performing the further steps of:**
allowing the user to set said parameters and notifying the service providing device (30) of the set parameters;
receiving implementation parameters necessary to implement a said function provided by the image processing device,
wherein the image processing device (10) further performs the steps of:
classifying the set parameters into one of a first parameter group concerning functions that are equipped in the image processing device (10) and a second parameter group concerning services provided by the service providing device (30),
notifying the parameters classified into the second parameter group to the service providing device (30), and
implementing the function equipped in the image processing device (10) based on the set parameters classified into the first parameter group.

## Patentansprüche

1. Bildverarbeitungssystem mit:
einer Bildverarbeitungsvorrichtung (10) zumindest zum Durchführen von einer der Funktionen zum Scannen eines Bilds, zum Erzeugen von Bilddaten, die ein Bild darstellen, und zum Drucken eines Bilds, das durch Bilddaten dargestellt ist, und
einer Dienstbereitstellungsvorrichtung (30) zum Bereitstellen eines Dienstes zumindest bezüglich der durch die Bildverarbeitungsvorrichtung (10) erzeugten Bilddaten oder der Bilddaten, die das zu druckende Bild darstellen, als Reaktion auf eine Anfrage von der Bildverarbeitungsvorrichtung (10), wobei die Dienstbereitstellungsvorrichtung (30) eine Speichereinrichtung (34) aufweist, die daran angepasst ist, Dienstschnittstelleninformationen (36) zu speichern, die Informationen entsprechend jedem Dienst enthalten, der durch die Dienstbereitstellungsvorrichtung (30) bereitgestellt werden kann und der durch die Bildverarbeitungsvorrichtung (10) durchgeführt werden kann;
wobei die Bildverarbeitungsvorrichtung (10) Folgendes aufweist:
eine Dienstanfrageeinrichtung (11, 15) zum Anfragen, dass die Dienstbereitstellungsvorrichtung (30) den Dienst bereitstellt; und
nach dem Aufnehmen der Anfrage zum Durchführen eines Dienstes von der Bildverarbeitungsvorrichtung (10) ist die Dienstbereitstellungsvorrichtung (30) daran angepasst:
die gespeicherte Dienstschnittstelleninformation bezüglich des angefragten Dienstes zu der Bildverarbeitungsvorrichtung zu senden, um ein Anzeigen einer Darstellung der gespeicherten Dienstschnittstelleninformation bezüglich des angefragten Dienstes zu veranlassen; und einem Benutzer der Bildverarbeitungsvorrichtung zu ermöglichen, einen oder mehrere Parameter für den Dienst auf der Grundlage der gespeicherten Dienstschnittstelleninformation bezüglich des angefragten Dienstes einzustellen;
wobei die Bildverarbeitungsvorrichtung eine Parameterspezifiziereinrichtung (11, 12) aufweist, die daran angepasst ist, dem Benutzer zu ermöglichen, die Parameter einzustellen, und die eine Einrichtung zum Mitteilen eines akquirierten Parameters aufweist, um der Dienstbereitstellungsvorrichtung (30) jene Parameter mitzuteilen, die durch die Parameterspezifiziereinrichtung (11, 12) erhalten werden;
wobei die Dienstbereitstellungsvorrichtung (30) eine Einrichtung (31, 32) zum Mitteilen eines Implementationsparameters aufweist, um der Bildverarbeitungsvorrichtung (10) jene Implementationsparameter mitzuteilen, die zum Implementieren der Funktion erforderlich sind, die durch die Funktionsimplementationseinrichtung (13, 14) bereitgestellt wird,
wobei die Bildverarbeitungsvorrichtung (10) mit einer Parameterklassifiziereinrichtung (11) versehen ist, um die durch die Parameterspezifiziereinrichtung (11, 12) erhaltenen Parameter in einer ersten Parametergruppe hinsichtlich Funktionen, mit der die Bildverarbeitungsvorrichtung (10) ausgestattet ist, oder einer zweiten Parametergruppe hinsichtlich Diensten zu klassifizieren, die durch die Dienstbereitstellungsvorrichtung (30) bereitgestellt werden,
wobei die Einrichtung zum Mitteilen des akquirierten Parameters daran angepasst ist, die Parameter, die in der zweiten Parametergruppe klassifiziert sind, der Dienstbereitstellungsvorrichtung (30) mitzuteilen, und
die Funktionsimplementationseinrichtung (13, 14) daran angepasst ist, die Funktion zu implementieren, mit der die Bildverarbeitungsvorrichtung (10) ausgestattet ist, und zwar auf der Grundlage der Parameter, die in der ersten Parametergruppe klassifiziert sind und durch die Einrichtung (31, 32) zum Mitteilen des Implementationsparameters mitgeteilt werden, und die Dienstbereitstellungsvorrichtung ist daran angepasst, Dienste auf der Grundlage der zweiten Parametergruppe durchzuführen.

2. Bildverarbeitungssystem gemäß Anspruch 1,
wobei Informationen, die von der Akquisitionsanfrageeinrichtung (31, 32) der Dienstbereitstellungsvorrichtung (30) zu der Bildverarbeitungsvorrichtung (10) zum Anfragen der Bildverarbeitungsvorrichtung (10) zum Erhalten der Parameter übertragen werden, Dienstschnittstelleninformationen (36) für die Bildverarbeitungsvorrichtung (10) enthalten, um einen Parametereingabebildschirm zum Einstellen einer Vielzahl an Parametern einschließlich Parameter bezüglich Funktionen, mit denen die Bildverarbeitungsvorrichtung (10) ausgestattet ist, und Parameter bezüglich Diensten anzuzeigen, die durch die Dienstbereitstellungsvorrichtung (30) bereitgestellt werden.

3. Bildverarbeitungssystem gemäß Anspruch 1 oder Anspruch 2,
wobei die Bildverarbeitungsvorrichtung (10) mit einer Parameterregistriereinrichtung (11, 16) versehen ist, um die Parameter zu registrieren, die in der ersten Parametergruppe durch die Parameterklassifiziereinrichtung (11) klassifiziert werden, und
die Funktionsimplementationseinrichtung (13, 14) daran angepasst ist, die Einstellungen der Funktion zu implementieren, mit der die Bildverarbeitungsvorrichtung (10) ausgestattet ist, und zwar auf der Grundlage der Parameter, die durch die Einrichtung zum Mitteilen des Implementationsparameters mitgeteilt werden, und der Parameter, die durch die Parameterregistriereinrichtung (11, 16) registriert werden.

4. Bildverarbeitungssystem gemäß Anspruch 1,
wobei die Parameterspezifiziereinrichtung (11, 12) daran angepasst ist, die Parameter zu spezifizieren, die einer Vielzahl an verschiedenen Diensten entsprechen,
wobei die Dienstanfrageeinrichtung (11, 15) daran angepasst ist, von der Dienstbereitstellungsvorrichtung (30) den Dienst anzufragen, der durch den vorbestimmten Betrieb von einem Benutzer spezifiziert wird,
wobei die Einrichtung zum Mitteilen des akquirierten Parameters daran angepasst ist, der Dienstbereitstellungsvorrichtung (30) jene Parameter mitzuteilen, die von der Parameterspezifiziereinrichtung (11, 12) erhalten werden, und
die Parameterregistriereinrichtung daran angepasst ist, die Parameter zu registrieren, die in der ersten Parametergruppe durch die Parameterklassifiziereinrichtung (11) klassifiziert werden.

5. Bildverarbeitungssystem gemäß Anspruch 1, mit:
einer Bestimmungseinrichtung zum Bestimmen dessen, ob die Dienstschnittstelleninformation (36), die von der Dienstbereitstellungsvorrichtung (30) aufgenommen wird, eine Dienstschnittstelleninformation (36) einer ersten Art oder einer zweiten Art ist,
wobei, wenn die Bestimmungseinheit bestimmt, dass die Dienstschnittstelleninformation (36), die von der Dienstbereitstellungsvorrichtung (30) aufgenommen wird, die Dienstschnittstelleninformation (36) der ersten Art ist, die Einrichtung zum Mitteilen des akquirierten Parameters der Dienstbereitstellungsvorrichtung (30) jene Parameter mitteilt, die in der zweiten Parametergruppe gruppiert sind, und
wobei, wenn die Bestimmungseinheit bestimmt, dass die Dienstschnittstelleninformation (36), die von der Dienstbereitstellungsvorrichtung (30) aufgenommen wird, die Dienstschnittstelleninformation (36) der zweiten Art ist, die Einrichtung zum Mitteilen des akquirierten Parameters der Dienstbereitstellungsvorrichtung (30) sowohl die Parameter, die in der ersten Parametergruppe gruppiert sind, als auch die Parameter mitteilt, die in der zweiten Parametergruppe gruppiert sind.

6. Bildverarbeitungsvorrichtung (10) zumindest zum Durchführen von einer der Funktionen zum Scannen eines Bilds, zum Erzeugen von Bilddaten, die ein Bild darstellen, und zum Drucken eines Bilds, das durch Bilddaten dargestellt ist, zum Gebrauch bei einem Bildverarbeitungssystem, das die Bildverarbeitungsvorrichtung und eine Dienstbereitstellungsvorrichtung (30) aufweist, um einen Dienst zumindest hinsichtlich der Bilddaten, die durch die Bildverarbeitungsvorrichtung (10) erzeugt werden, und der Bilddaten bereitzustellen, die das zu druckende Bild darstellen, als Reaktion auf eine Anfrage von der Bildverarbeitungsvorrichtung (10), wobei die Dienstbereitstellungsvorrichtung (30) eine Speichereinrichtung (34) aufweist, die daran angepasst ist, Dienstschnittstelleninformationen (36) einschließlich Informationen entsprechend zu jedem Dienst zu speichern, der durch die Dienstbereitstellungsvorrichtung (30) bereitgestellt werden kann und durch die Bildverarbeitungsvorrichtung (10) durchgeführt werden kann;
wobei die Bildverarbeitungsvorrichtung (10) Folgendes aufweist:
eine Dienstanfrageeinrichtung (11, 15) zum Anfragen, dass die Dienstbereitstellungsvorrichtung (30) den Dienst bereitstellt; und
als Reaktion auf das Aufnehmen einer Dienstschnittstelleninformation (36) bezüglich des angefragten Dienstes von der Dienstbereitstellungsvorrichtung (30) ein Veranlassen einer Anzeige einer Darstellung der gespeicherten Dienstschnittstelleninformation (36) bezüglich des angefragten Dienstes, um einem Benutzer der Bildverarbeitungsvorrichtung zu ermöglichen, einen oder mehrere Parameter für den Dienst auf der Grundlage der gespeicherten Dienstschnittstelleninformation bezüglich des angefragten Dienstes einzustellen;
wobei die Bildverarbeitungsvorrichtung eine Parameterspezifiziereinrichtung (11, 12) aufweist, die daran angepasst ist, dem Benutzer zu ermöglichen, die Parameter einzustellen, und eine Einrichtung zum Mitteilen eines akquirierten Parameters aufweist, um der Dienstbereitstellungsvorrichtung (30) jene Parameter mitzuteilen, die durch die Parameterspezifiziereinrichtung (11, 12) erhalten werden;
eine Einrichtung zum Aufnehmen von Implementationsparametern, die zum Implementieren der Funktion erforderlich sind, die durch die Funktionsimplementationseinrichtung (13, 14) bereitgestellt wird,
wobei die Bildverarbeitungsvorrichtung (10) mit einer Parameterklassifiziereinrichtung (11) versehen ist, um die durch die Parameterspezifiziereinrichtung (11, 12) erhaltenen Parameter in einer ersten Parametergruppe bezüglich Funktionen, mit denen die Bildverarbeitungsvorrichtung (10) ausgestattet ist, oder einer zweiten Parametergruppe bezüglich Diensten zu klassifizieren, die durch die Dienstbereitstellungsvorrichtung (30) bereitgestellt werden,
wobei die Einrichtung zum Mitteilen des akquirierten Parameters daran angepasst ist, jene Parameter, die in der zweiten Parametergruppe klassifiziert sind, der Dienstbereitstellungsvorrichtung (30) mitzuteilen, und
die Funktionsimplementationseinrichtung (13, 14) daran angepasst ist, die Funktion, mit der die Bildverarbeitungsvorrichtung (10) ausgestattet ist, auf der Grundlage der Parameter zu implementieren, die in der ersten Parametergruppe klassifiziert sind und durch die Einrichtung (31, 32) zum Mitteilen des Implementationsparameters mitgeteilt werden.

7. Computerprogrammprodukt, das computerimplementierbare Befehle aufweist, um ein Computersystem zum Betrieb als ein Bildverarbeitungssystem zu veranlassen, mit:
einer Bildverarbeitungsvorrichtung (10) zumindest zum Durchführen von einer der Funktionen zum Scannen eines Bilds, zum Erzeugen von Bilddaten, die ein Bild darstellen, und zum Drucken eines Bilds, das durch Bilddaten dargestellt wird, und
einer Dienstbereitstellungsvorrichtung (30) zum Bereitstellen eines Dienstes zumindest bezüglich der durch die Bildverarbeitungsvorrichtung (10) erzeugten Bilddaten oder der Bilddaten, die das zu druckende Bild darstellen, als Reaktion auf eine Anfrage von der Bildverarbeitungsvorrichtung (10), wobei die Dienstbereitstellungsvorrichtung (30) eine Speichereinrichtung (34) aufweist, die daran angepasst ist, Dienstschnittstelleninformationen (36) einschließlich Informationen entsprechend jedem Dienst zu speichern, der durch die Dienstbereitstellungsvorrichtung (30) bereitgestellt werden kann und durch die Bildverarbeitungsvorrichtung (10) durchgeführt werden kann;
wobei die Bildverarbeitungsvorrichtung (10) die folgenden Schritte durchführt:
Anfragen, dass die Dienstbereitstellungsvorrichtung (30) den Dienst bereitstellt; und
nach dem Aufnehmen der Anfrage zum Durchführen eines Dienstes von der Bildverarbeitungsvorrichtung (10) führt die Dienstbereitstellungsvorrichtung (30) die folgenden Schritte durch:
Senden einer gespeicherten Dienstschnittstelleninformation (36) bezüglich des angefragten Dienstes zu der Bildverarbeitungsvorrichtung (10), um eine Anzeige einer Darstellung der gespeicherten Dienstschnittstelleninformation (36) bezüglich des angefragten Dienstes zu veranlassen; und um einem Benutzer der Bildverarbeitungsvorrichtung zu ermöglichen, einen oder mehrere Parameter für den Dienst auf der Grundlage der gespeicherten Dienstschnittstelleninformation (36) bezüglich des angefragten Dienstes einzustellen;
wobei die Bildverarbeitungsvorrichtung die folgenden weiteren Schritte durchführt: Ermöglichen, dass der Benutzer die Parameter einstellt und Mitteilen der erhaltenen Parameter zu der Dienstbereitstellungsvorrichtung (30);
wobei die Dienstbereitstellungsvorrichtung (30) den Schritt zum Mitteilen der Implementationsparameter, die zum Implementieren der Funktion erforderlich sind, die durch die Funktionsimplementationseinrichtung (13, 14) bereitgestellt wird, zu der Bildverarbeitungsvorrichtung (10) durchführt,
wobei die Bildverarbeitungsvorrichtung (10) des Weiteren die folgenden Schritte durchführt:
Klassifizieren der erhaltenen Parameter in einer ersten Parametergruppe bezüglich Funktionen, mit denen die Bildverarbeitungsvorrichtung (10) ausgestattet ist, oder einer zweiten Parametergruppe bezüglich Diensten, die durch die Dienstbereitstellungsvorrichtung (30) bereitgestellt werden,
Mitteilen der Parameter, die in der zweiten Parametergruppe klassifiziert sind, zu der Dienstbereitstellungsvorrichtung (30), und
Implementieren der Funktion, mit der die Bildverarbeitungsvorrichtung (10) ausgestattet ist, auf der Grundlage der Parameter, die in der ersten Parametergruppe klassifiziert sind und durch die Einrichtung (31, 32) zum Mitteilen der Implementationsparameter mitgeteilt werden; und
wobei die Dienstbereitstellungsvorrichtung Dienste auf der Grundlage der zweiten Parametergruppe durchführt.

8. Computerprogrammprodukt, das computerimplementierbare Befehle aufweist, um ein Computersystem zum Betrieb als eine Bildverarbeitungsvorrichtung (10) zu veranlassen, um zumindest eine der Funktionen zum Scannen eines Bilds, zum Erzeugen von Bilddaten, die ein Bild darstellen, und zum Drucken eines Bilds durchzuführen, das durch Bilddaten dargestellt wird, zum Gebrauch bei einem Bildverarbeitungssystem, das die Bildverarbeitungsvorrichtung und eine Dienstbereitstellungsvorrichtung (30) aufweist, um einen Dienst zumindest bezüglich der Bilddaten, die durch die Bildverarbeitungsvorrichtung (10) erzeugt werden, oder der Bilddaten bereitzustellen, die das zu druckende Bild darstellen, als Reaktion auf eine Anfrage von der Bildverarbeitungsvorrichtung (10), wobei die Dienstbereitstellungsvorrichtung (30) eine Speichereinrichtung (34) aufweist, die daran angepasst ist, Dienstschnittstelleninformationen (36) einschließlich Informationen entsprechend jedem Dienst zu speichern, der durch die Dienstbereitstellungsvorrichtung (30) bereitgestellt werden kann und durch die Bildverarbeitungsvorrichtung (10) durchgeführt werden kann;
wobei die Bildverarbeitungsvorrichtung (10) die folgenden Schritte durchführt:
Anfragen, dass die Dienstbereitstellungsvorrichtung (30) den Dienst bereitstellt; und
als Reaktion auf die Aufnahme von gespeicherten Dienstschnittstelleninformationen (36) bezüglich des angefragten Dienstes von der Dienstbereitstellungsvorrichtung ein Veranlassen einer Anzeige einer Darstellung der gespeicherten Dienstschnittstelleninformation bezüglich des angefragten Dienstes, um einem Benutzer der Bildverarbeitungsvorrichtung zu ermöglichen, einen oder mehrere Parameter für den Dienst auf der Grundlage der gespeicherten Dienstschnittstelleninformation bezüglich des angefragten Dienstes einzustellen;
wobei die Bildverarbeitungsvorrichtung des Weiteren die folgenden Schritte durchführt:
Ermöglichen des Benutzers, die Parameter einzustellen, und Mitteilen der eingestellten Parameter zu der Dienstbereitstellungsvorrichtung (30);
Aufnehmen von Implementationsparametern, die zum Implementieren der Funktion erforderlich sind, die durch die Bildverarbeitungsvorrichtung bereitgestellt wird,
wobei die Bildverarbeitungsvorrichtung (10) des Weiteren die folgenden Schritte durchführt:
Klassifizieren der eingestellten Parameter in einer ersten Parametergruppe bezüglich Funktionen, mit denen die Bildverarbeitungsvorrichtung (10) ausgestattet ist, oder einer zweiten Parametergruppe bezüglich Diensten, die durch Dienstbereitstellungsvorrichtung (30) bereitgestellt werden,
Mitteilen der Parameter, die in der zweiten Parametergruppe klassifiziert sind, zu der Dienstbereitstellungsvorrichtung (30), und
Implementieren der Funktion, mit der die Bildverarbeitungsvorrichtung (10) ausgestattet ist, auf der Grundlage der eingestellten Parameter, die in der ersten Parametergruppe klassifiziert sind.

## Revendications

1. Système de traitement d'image, comprenant :
un dispositif (10) de traitement d'image pour exécuter au moins l'une des fonctions de balayage d'une image, de génération de données d'image représentant une image et d'impression d'une image représentée par des données d'image, et
un dispositif (30) de fourniture de services pour fournir un service concernant au moins l'une des données d'image générées par le dispositif (10) de traitement d'image et des données d'image représentant l'image à imprimer, en réponse à une demande du dispositif (10) de traitement d'image, le dispositif (30) de fourniture de services comprenant un moyen de stockage (34) adapté pour stocker des informations (36) d'interface de services comportant des informations correspondant à chaque service qui peut être pourvu par le dispositif (30) de fourniture de services et réalisé par le dispositif (10) de traitement d'image ;
dans lequel le dispositif (10) de traitement d'image comprend :
des moyens (11, 15) de demande de services pour demander que le dispositif (30) de fourniture de services fournisse le service ; et
après réception de ladite demande du dispositif (10) de traitement d'image de réaliser un service, le dispositif (30) de fourniture de services est adapté pour :
envoyer des informations d'interface de services stockées relatives audit service demandé au dispositif de traitement d'image pour amener une représentation desdites informations d'interface de services stockées relatives audit service demandé à être affichée ; et pour permettre à un utilisateur du dispositif de traitement d'image d'établir un ou plusieurs paramètres pour le service sur la base desdites informations d'interface de services stockées relatives audit service demandé ;
le dispositif de traitement d'image comprenant des moyens (11, 12) de spécification de paramètres adaptés pour permettre à l'utilisateur d'établir lesdits paramètres et comprenant un moyen de notification de paramètres acquis pour notifier au dispositif (30) de fourniture de services les paramètres obtenus par les moyens (11, 12) de spécification de paramètres ;
le dispositif (30) de fourniture de services comporte des moyens (31, 32) de notification de paramètres de mise en oeuvre pour notifier au dispositif (10) de traitement d'image les paramètres de mise en oeuvre nécessaires pour mettre en oeuvre ladite fonction pourvue par les moyens (13, 14) de mise en oeuvre de fonction,
dans lequel le dispositif (10) de traitement d'image est pourvu d'un moyen (11) de classification de paramètres pour classer les paramètres obtenus par les moyens (11, 12) de spécification de paramètres dans l'un d'un premier groupe de paramètres concernant des fonctions qui sont équipées dans le dispositif (10) de traitement d'image et d'un deuxième groupe de paramètres concernant des services fournis par le dispositif (30) de fourniture de services,
le moyen de notification de paramètres acquis est adapté pour notifier les paramètres classés dans le deuxième groupe de paramètres au dispositif (30) de fourniture de services, et
les moyens (13,14) de mise en oeuvre de fonction sont adaptés pour mettre en oeuvre la fonction équipée dans le dispositif (10) de traitement d'image sur la base des paramètres classés dans le premier groupe de paramètres et notifiés par les moyens (31, 32) de notification de paramètres de mise en oeuvre, et le dispositif de fourniture de services est adapté pour réaliser des services sur la base du deuxième groupe de paramètres.

2. Système de traitement d'image selon la revendication 1,
dans lequel des informations transmises depuis les moyens (31, 32) de demande d'acquisition du dispositif (30) de fourniture de services vers le dispositif (10) de traitement d'image pour demander au dispositif (10) de traitement d'image d'obtenir les paramètres comportent des informations (36) d'interface de services pour le dispositif (10) de traitement d'image pour afficher un écran d'entrée de paramètres pour établir une pluralité de paramètres comportant des paramètres concernant des fonctions équipées dans le dispositif (10) de traitement d'image et des paramètres concernant des services pourvus par le dispositif (30) de fourniture de services.

3. Système de traitement d'image selon la revendication 1 ou 2,
dans lequel le dispositif (10) de traitement d'image est pourvu de moyens (11, 16) d'enregistrement de paramètres pour enregistrer les paramètres classés dans le premier groupe de paramètres par le moyen (11) de classification de paramètres, et
les moyens (13, 14) de mise en oeuvre de fonction sont adaptés pour mettre en oeuvre les réglages de la fonction équipée dans le dispositif (10) de traitement d'image sur la base des paramètres notifiés par les moyens de notification de paramètres de mise en oeuvre et les paramètres enregistrés par les moyens (11, 16) d'enregistrement de paramètres.

4. Système de traitement d'image selon la revendication 1,
dans lequel les moyens (11, 12) de spécification de paramètres sont adaptés pour spécifier les paramètres qui correspondent à une pluralité de services respectifs,
les moyens (11, 15) de demande de services sont adaptés pour demander au dispositif (30) de fourniture de services le service qui est spécifié par l'opération prédéterminée d'un utilisateur,
le moyen de notification de paramètres acquis est adapté pour notifier au dispositif (30) de fourniture de services les paramètres obtenus à partir des moyens (11, 12) de spécification de paramètres, et
le moyen d'enregistrement de paramètres est adapté pour enregistrer les paramètres classés dans le premier groupe de paramètres par le moyen (11) de classification de paramètres.

5. Système de traitement d'image selon la revendication 1, comprenant :
un moyen de détermination pour déterminer si les informations (36) d'interface de services reçues à partir du dispositif (30) de fourniture de services sont des informations (36) d'interface de services d'un premier type ou d'un deuxième type,
dans lequel, lorsque l'unité de détermination détermine que les informations (36) d'interface de services reçues à partir du dispositif (30) de fourniture de services sont les informations (36) d'interface de services du premier type, le moyen de notification de paramètres acquis notifie au dispositif (30) de fourniture de services les paramètres regroupés dans le deuxième groupe de paramètres, et
dans lequel, lorsque l'unité de détermination détermine que les informations (36) d'interface de services reçues à partir du dispositif (30) de fourniture de services sont les informations (36) d'interface de services du deuxième type, le moyen de notification de paramètres acquis notifie au dispositif (30) fourniture de services à la fois les paramètres regroupés dans le premier groupe de paramètres et les paramètres regroupés dans le deuxième groupe de paramètres.

6. Dispositif (10) de traitement d'image permettant d'exécuter au moins l'une des fonctions de balayage d'une image, de génération de données d'image représentant une image et d'impression d'une image représentée par des données d'image, à utiliser dans un système de traitement d'image comprenant le dispositif de traitement d'image et un dispositif (30) de fourniture de services pour fournir un service concernant au moins d'une des données d'image générées par le dispositif (10) de traitement d'image et des données d'image représentant l'image à imprimer, en réponse à une demande du dispositif (10) de traitement d'image, le dispositif (30) de fourniture de services comprenant un moyen de stockage (34) adapté pour stocker des informations (36) d'interface de services comportant des informations correspondant à chaque service qui peut être pourvu par le dispositif (30) de fourniture de services et peut être réalisé par le dispositif (10) de traitement d'image ;
le dispositif (10) de traitement d'image comprenant :
des moyens (11, 15) de demande de services pour demander que le dispositif (30) de fourniture de services fournisse le service ; et
en réponse à la réception d'informations d'interface de services relatives audit service demandé à partir du dispositif (30) de fourniture de services, amener une représentation desdites informations d'interface de services stockées relatives audit service demandé à être affichée pour permettre à un utilisateur du dispositif de traitement d'image d'établir un ou plusieurs paramètres pour le service sur la base desdites informations d'interface de services stockées relatives audit service demandé ;
le dispositif de traitement d'image comprenant des moyens (11, 12) de spécification de paramètres adaptés pour permettre à l'utilisateur d'établir lesdits paramètres et comprenant un moyen de notification de paramètres acquis pour notifier au dispositif (30) de fourniture de services les paramètres obtenus par les moyens (11, 12) de spécification de paramètres ;
un moyen de réception de paramètres de mise en oeuvre nécessaires pour mettre en oeuvre ladite fonction pourvue par les moyens (13, 14) de mise en oeuvre de fonction,
dans lequel le dispositif (10) de traitement d'image est pourvu d'un moyen (11) de classification de paramètres pour classer les paramètres obtenus par les moyens (11, 12) de spécification de paramètres dans l'un d'un premier groupe de paramètres concernant des fonctions qui sont équipées dans le dispositif (10) de traitement d'images et d'un deuxième groupe de paramètres concernant des services pourvus par le dispositif (30) de fourniture de services,
le moyen de notification de paramètres acquis est adapté pour notifier les paramètres classés dans le deuxième groupe de paramètres au dispositif (30) de fourniture de services, et
les moyens (13, 14) de mise en oeuvre de fonction sont adaptés pour mettre en oeuvre la fonction équipée dans le dispositif (10) de traitement d'image sur la base des paramètres classés dans le premier groupe de paramètres et notifiés par les moyens (31,32) de notification de paramètres de mise en oeuvre.

7. Produit de programme informatique comprenant des instructions exécutables par ordinateur pour amener un système informatique à fonctionner comme un système de traitement d'image, comprenant :
un dispositif (10) de traitement d'image pour exécuter au moins l'une des fonctions de balayage d'une image, de génération de données d'image représentant une image et d'impression d'une image représentée par des données d'image, et
un dispositif (30) de fourniture de services pour fournir un service concernant au moins d'une des données d'image générées par le dispositif (10) de traitement d'image et des données d'image représentant l'image à imprimer, en réponse à une demande du dispositif (10) de traitement d'image, le dispositif (30) de fourniture de services comprenant un moyen de stockage (34) adapté pour stocker des informations (36) d'interface de services comportant des informations correspondant à chaque service qui peut être pourvu par le dispositif (30) de fourniture de services et réalisé par le dispositif (10) de traitement d'image ;
dans lequel le dispositif (10) de traitement d'image exécute les étapes consistant à :
demander que le dispositif (30) de fourniture de services fournisse le service ; et
après réception de ladite demande du dispositif (10) de traitement d'image de réaliser un service, le dispositif (30) de fourniture de services exécute les étapes consistant à :
envoyer des informations d'interface de services stockées relatives audit service demandé au dispositif de traitement d'image pour amener une représentation desdites informations d'interface de services stockées relatives audit service demandé à être affichée ; et pour permettre à un utilisateur du dispositif de traitement d'image d'établir un ou plusieurs paramètres pour le service sur la base desdites informations d'interface de services stockées relatives audit service demandé ;
le dispositif de traitement d'image exécutant les étapes supplémentaires qui consistent à : permettre à l'utilisateur d'établir lesdits paramètres et notifier au dispositif (30) de fourniture de services les paramètres obtenus ;
le dispositif (30) de fourniture de services exécute l'étape qui notifie au dispositif (10) de traitement d'image les paramètres de mise en oeuvre nécessaires pour mettre en oeuvre ladite fonction pourvue par les moyens (13, 14) de mise en oeuvre de fonction,
dans lequel le dispositif (10) de traitement d'image exécute en outre les étapes consistant à :
classer les paramètres obtenus dans l'un d'un premier groupe de paramètres concernant des fonctions qui sont équipées dans le dispositif (10) de traitement d'image et d'un deuxième groupe de paramètres concernant des services pourvus par le dispositif (30) de fourniture de services,
notifier les paramètres classés dans le deuxième groupe de paramètres au dispositif (30) de fourniture de services ; et
mettre en oeuvre la fonction équipée dans le dispositif (10) de traitement d'image sur la base des paramètres classés dans le premier groupe de paramètres et notifiés par les moyens (31, 32) de notification de paramètres de mise en oeuvre ; et
le dispositif de fourniture de services fournit des services sur la base du deuxième groupe de paramètres.

8. Produit de programme informatique comprenant des instructions exécutables par ordinateur pour amener un système informatique à fonctionner comme un dispositif (10) de traitement d'image pour exécuter au moins l'une des fonctions de balayage d'une image, de génération de données d'image représentant une image et d'impression d'une image représentée par des données d'image ; à utiliser dans un système de traitement d'image comprenant le dispositif de traitement d'image et un dispositif (30) de fourniture de services pour fournir un service concernant au moins l'une des données d'image générées par le dispositif (10) de traitement d'image et les données d'image représentant l'image à imprimer, en réponse à une demande du dispositif (10) de traitement d'image, le dispositif (30) de fourniture de services comprenant un moyen de stockage (34) adapté pour stocker des informations (36) d'interface de services comportant des informations correspondant à chaque service qui peut être pourvu par le dispositif (30) de fourniture de services et exécuté par le dispositif (10) de traitement d'image ;
dans lequel le dispositif (10) de traitement d'image exécute les étapes consistant à :
demander que le dispositif (30) de fourniture de services fournisse le service ; et
en réponse à la réception d'informations d'interface de services stockées relatives audit service demandé du dispositif de fourniture de services pour amener une représentation desdites informations d'interface de services stockées relatives audit service demandé à être affichée permettant à un utilisateur du dispositif de traitement d'image de régler un ou plusieurs paramètres pour le service sur la base desdites informations d'interface de services stockées relatives audit service demandé ;
le dispositif de traitement d'image exécutant les étapes supplémentaires qui consistent à :
permettre à l'utilisateur d'établir lesdits paramètres et de notifier au dispositif (30) de fourniture de services les paramètres établis ;
recevoir des paramètres de mise en oeuvre nécessaires pour mettre en oeuvre ladite fonction pourvue par le dispositif de traitement d'image,
dans lequel le dispositif (10) de traitement d'image exécute en outre les étapes consistant à :
classer les paramètres établis dans l'un d'un premier groupe de paramètres concernant des fonctions qui sont équipées dans le dispositif (10) de traitement d'image et d'un deuxième groupe de paramètres concernant des services pourvus par le dispositif (30) de fourniture de services,
notifier les paramètres classés dans le deuxième groupe de paramètres au dispositif (30) de fourniture de services ; et
mettre en oeuvre la fonction équipée dans le dispositif (10) de traitement d'image sur la base des paramètres établis classés dans le premier groupe de paramètres.
